# EUROPEAN PATENT SPECIFICATION

(11) **EP 2 969 422 B1**
(45) Date of publication and mention of the grant of the patent: **08.08.2018**
(21) Application number: 14779836.7
(22) Date of filing: 12.03.2014
(51) Int. Cl.: A61F 13/53, A61L 15/60, D04H 1/728, B23D 45/06

(54) **POWER TOOL HAVING A HEIGHT ADJUSTMENT SYSTEM**
ELEKTROWERKZEUG MIT SYSTEM ZUR EINSTELLUNG DER HÖHE
OUTIL ÉLECTRIQUE AVEC SYSTÈME DE RÉGLAGE DE HAUTEUR

(30) Priority: 13.03.2013 US 201361778979 P; 13.03.2013 US 201361778616 P; 13.03.2013 US 201361778452 P
(43) Date of publication of application: 20.01.2016
(73) Proprietor: Robert Bosch GmbH, 70442 Stuttgart (DE)
(72) Inventor: KOEGEL, Jan, Oak Park, IL 60302 (US); LUGINBILL, Michael, Troy, MI 48084 (US); ASSALIYSKI, Martin, Chicago, IL 60625 (US)
(86) International application number: PCT/US2014/024032
(87) International publication number: WO 2014/164985

(56) References cited:
- WO-A1-2007/022678
- DE-A1-102007 039 570
- DE-A1-102008 001 727
- US-A- 4 637 289
- US-A- 5 040 444
- US-A- 5 040 444
- US-A- 5 119 310
- US-A1- 2010 037 739
- US-A1- 2010 326 251
- US-A1- 2011 011 225
- US-A1- 2011 100 183
- US-A1- 2011 100 183

## Description

### Technical Field

This disclosure relates to power tools and, more particularly, to a power tool according to the preamble of claim 1.

### Background

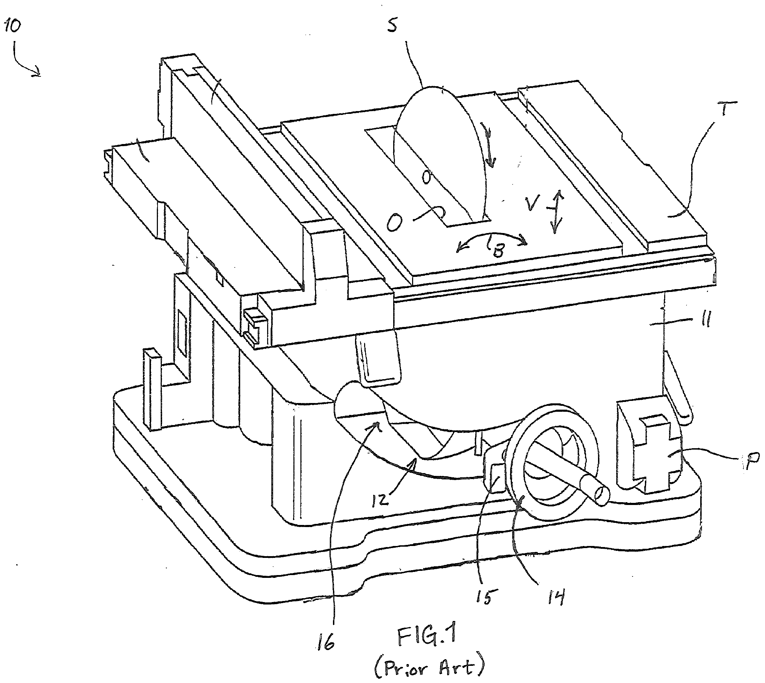

Table saws are used in the construction and wood working industries. When a saw blade of a table saw comes in contact with a workpiece, e.g., a piece of lumber, to cut the workpiece, the height and angle of the blade relative to the workpiece determines the depth and angle of cut into the workpiece. Because workpieces vary significantly in size and desired cut types, it is advantageous to make saw blades adjustable relative to the work surface of the table saw, and thus adjustable relative to the workpiece supported by the work surface. An example of a prior art table saw with a height adjustment mechanism is depicted in **FIG. 1**

The table saw **10** depicted in **FIG. 1** includes a housing **11** supporting a table top work surface **T** with a saw blade **S** projecting through an opening **O** defined in the surface. The saw blade **S** is supported for rotation by a carriage **12** adjustably supported within the housing **11,** with the carriage configured to carry a drive motor (not shown) for rotating the saw blade. The table saw **10** may further include a table extension and a rip fence as depicted in **FIG. 1****.** The table saw **10** further includes an on/off or power switch **P** for energizing the drive motor to operate the saw blade. The particular position of the saw blade **S** relative to the table top **T** may be adjusted by rotating a crank wheel **14** of a height adjustment mechanism that interacts with the carriage **12** through worm gears, bevel gears, or other kinematic sliding mechanisms of the table saw **10** to adjust the vertical position **V** of the saw blade **S.** The power tool **10** further includes a bevel adjustment mechanism **15** that can be manually actuated to slide the height adjustment mechanism **14** along a curved slot **16** formed in the housing **11** to pivot the saw blade **S** in the direction of the arrows **B.** In some power tools the table top **T** is adjusted while the position of the blade remains vertical. In those types of power tools, the adjustment mechanisms **14, 15** may be configured to raise/lower or tilt the table top relative to the saw blade. The end result of either approach (i.e., moving the blade or moving the table top) is that the saw blade contacts the workpiece at a different height or angle.

Both adjustments of the saw blade **S,** vertical and bevel angle, are typically tedious and time consuming, and both mechanisms **14, 15** are difficult use to provide fine adjustments. For instance, fine vertical adjustments **V** require repetitive manual turning of the crank. Further, the process is imprecise and can require substantial effort to achieve the precise saw blade configuration that is desired. Finer adjustments can be accomplished by using finer toothed gearing, but at the cost of even more turning of the crank. Additionally, in some circumstances, the workpiece may not have a uniform thickness, creating difficulty to the user in manually adjusting the height or bevel angle during operation of the table saw.

Consequently, there is a need for adjustment mechanisms for the saw blade of a power tool that is easier and less time consuming to operate and that can accomplish fine adjustments. Power tools, such as power table saws, planers, miter saws, vertical saws, bevel saws, circular saws, or the like have evolved through the years to incorporate various safety mechanisms, such as blade guards, that try to prevent the operator from contacting the moving tool during an operation.

Most power tools include an on/off switch that is used by the operator to turn the power tool on and to shut the tool off after an operation is completed. The problem with the power switch is that it requires the operator to manually de-activate the switch after the cutting operation is complete, but while the tool is still operating or the saw blade is still spinning. During the cut the operator's attention is fixed on the task at hand, namely to guide the workpiece through the working saw blade at a consistent horizontal speed to produce a clean cut. Once the cut is complete the operator's attention is naturally on the finished product, at a minimum to move the separated pieces of the workpiece from the working space around the cutting blade. The operator's attention is then diverted to finding the power switch to deactivate the power tool, all while the saw blade is continue to run.

Even the most attentive craftsman is prone to lapses in attention once the cut has been finished. Consequently there is a need for a need for a power tool that incorporates a feature that automatically shuts off the drive motor to the tool after a cutting operation has been completed or under other conditions indicating that the cutting tool should be de-activated.

DE 10 2008001727 A1 discloses a power tool according to the preamble of claim 1, in particular a circular table saw, having a tool holding fixture, in particular for a disk-shaped, rotary-drivable tool, and a protective device. The protective device may be provided for the purpose of guiding the tool into a safety position, and from the safety position into at least one working position.

### Summary

According to an aspect of the present invention, a power tool having the features of new claim 1 is provided. Said power tool comprises an automatic height adjustment assembly for a table saw having a work surface and a saw blade. The automatic height adjustment assembly is coupled to the saw blade and configured to move the saw blade upwardly or downwardly relative to the work surface. The automatic height adjustment assembly includes at least one sensor, a controller, and an actuator unit, e.g. a motor. The at least one sensor and the motor are operatively coupled to the controller. The at least one sensor is arranged relative to the power tool so as to detect the presence and outside boundaries of a workpiece adjacent to the saw blade. Upon detecting the presence and outside boundaries of a workpiece, the at least one sensor transmits signals to the controller.

The controller processes the transmitted signals to determine whether to operate the motor to raise or lower the height of the saw blade relative to the work surface.

### Brief Description of the Drawings

**FIG. 1** depicts a top front perspective view of a prior art table saw.
**FIG. 2** depicts a schematic side view of an automatic height adjustment assembly for use in a table saw, such as the saw shown in **FIG. 1****,** with the assembly in an initial stage of operation for reducing the blade height.
**FIG. 3** depicts a schematic side view of an alternative automatic height adjustment assembly for use in a table saw such as the saw shown in **FIG. 1**
**FIG. 4** depicts a schematic side view of another alternative automatic height adjustment assembly for use in a table saw like that of **FIG. 1****.**
**FIG. 5** depicts a schematic drawing of the automatic height adjustment assembly of **FIG. 2** in an adjustment stage of operation.
**FIG. 6** depicts a schematic drawing of the automatic height adjustment assembly of **FIG. 2** in a cut-ready stage of operation after lowering the blade height to the workpiece height.
**FIG. 7** depicts a schematic drawing of the automatic height adjustment assembly of **FIG. 2** in another initial stage of operation for raising the blade height.
**FIG. 8** depicts a flowchart of steps for operating the automatic height adjustment assembly of **FIG. 2** and **FIGS. 5****-7.**
**FIG. 9** depicts a schematic drawing of another automatic height adjustment assembly in a first measurement stage of operation.
**FIG. 10** depicts a schematic drawing of the automatic height adjustment assembly of **FIG. 9** in a second measurement stage of operation.
**FIG. 11** depicts a blade speed profile graph implemented by a controller of the automatic height adjustment assembly disclosed herein.
**FIG. 12** depicts a schematic drawing of an automatic height adjustment assembly according to a further aspect of the present disclosure, shown in a fist measurement stage of operation.
**FIG. 13** depicts a schematic drawing of the automatic height adjustment assembly of **FIG. 12** in a second measurement stage of operation.
**FIG. 14** depicts a schematic drawing of the automatic height adjustment assembly of **FIG. 13** in a third measurement stage of operation.
**FIG. 15** is a diagram of a motor driven combined bevel and height adjustment system according to one aspect of the present disclosure.
**FIG. 16** is an enlarged cut-away view of a centrifugal clutch of the system shown in **FIG. 15****.**
**FIG. 17** is a view of a bevel adjustment component according to one aspect of the present disclosure.
**FIG. 18** is a view of a height adjustment component for use with the bevel adjustment component shown in **FIG. 17** in a power tool.
**FIG. 19** is a diagram of a motor driven combined bevel and height adjustment system according to a further aspect of the present disclosure.
**FIG. 20** is a side view of a power tool table incorporating a height and bevel adjustment switch.
**FIGS. 21(a), (b)** are views of a bevel lock arrangement for use with the adjustment system of **FIG. 19****.**
**FIGS. 22(a)** and **22(b)** are diagrams of a workpiece during and after performing a cut with the saw blade of a power tool with the drive motor for the power tool operating at first and second conditions.
**FIGS. 23(a)** and **23(b)** are diagrams of a workpiece during and after performing a cut with the saw blade of a power tool, the power tool including a workpiece sensor shown in an engaged and a disengaged state.
**FIGS. 24(a)** and **24(b)** are diagrams of a workpiece prior to and after performing a cut with the saw blade of a power tool, the power tool including a workpiece sensor shown in a detected and a non-detected state.
**FIGS. 25(a)** and **25(b)** are diagrams are diagrams of a workpiece prior to and after performing a cut with the saw blade of a power tool, the power tool including a sensor for blade height adjustment system, with the sensor shown in a detected and a non-detected state.
**FIG. 26** is a diagram of a workpiece sensor according to a further embodiment of the present disclosure.

### Detailed Description of the Embodiments

For the purposes of promoting an understanding of the invention, reference will now be made to the embodiments illustrated in the drawings and described in the following written specification. It is understood that no limitation to the scope of the invention is thereby intended. It is further understood that the present invention includes any alterations and modifications to the illustrated embodiments that fall within the scope of the invention as defined by the claims.

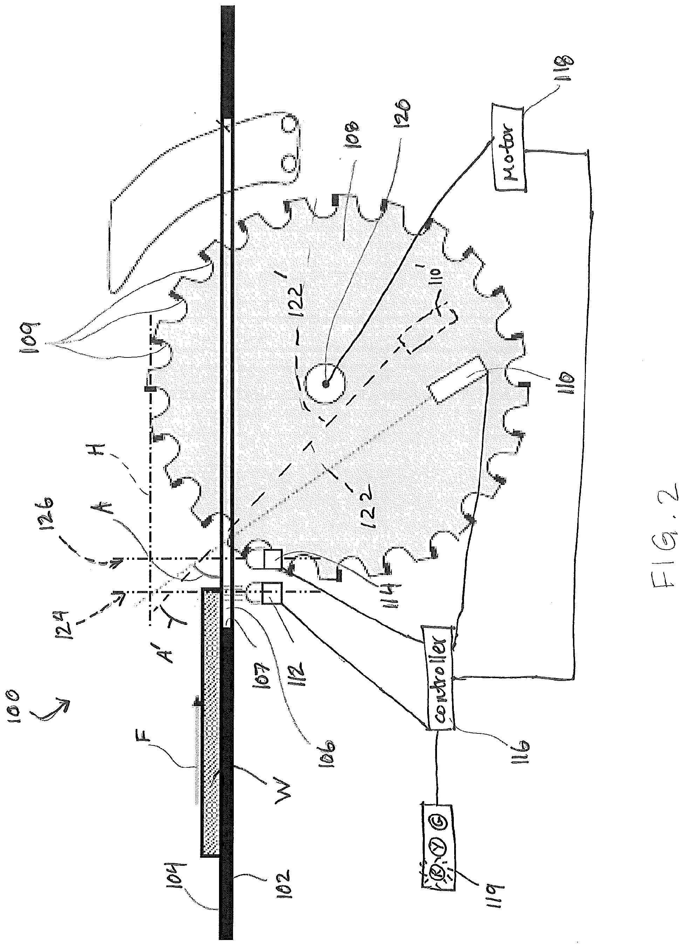

Referring to **FIG. 2****,** an automatic height adjustment assembly **100** is depicted that is adapted for use in a power tool, such as the table saw **10** shown in **FIG. 1****.** Alternatively, the power tool may be a planer, a miter saw, a bevel saw, a compound saw, a vertical saw, a band saw, a router, a circular saw, or the like. The automatic height adjustment assembly **100** is mounted to a support arrangement, such as the housing **11** and/or carriage **12** described above, and is movable relative to the support arrangement. As shown, the automatic height adjustment assembly **100** is situated below a table top **102** having a work surface **104** and a saw blade opening **106** and is arranged adjacent to a saw blade **108** positioned within the saw blade opening **106.** The automatic height adjustment assembly **100** is configured to detect a workpiece **W** being fed to the saw blade **108** in a direction indicated by the arrow **F.**

The saw blade **108** is arranged relative to the work surface **104** such that teeth **109** of the saw blade **108** extend at a height **H** above the work surface **104.** The height **H** of the teeth **109** relative to the work surface **104** determines how far into the bottom of a workpiece **W** the saw blade **108** will cut when the workpiece **W** passes over the saw blade **108.** Operating the automatic height adjustment assembly **100** to raise the saw blade **108** relative to the work surface **104** causes the teeth **109** to have a greater height **H** such that the cut into or through the workpiece **W** will be farther from the bottom of the workpiece **W,** such as in making a through cut. Conversely, operating the automatic height adjustment assembly **100** to lower the saw blade **108** relative to the work surface **104** causes the teeth **109** to have a lower height **H** such that the cut into or through the workpiece **W** will be closer to the bottom of the workpiece **W.** It is contemplated that the tool operator may override the operation of the automatic height adjustment assembly **100** by feeding the workpiece **W** past a front of the saw blade opening **107** and into the saw blade **108** without waiting for the automatic height adjustment assembly **100** to begin operation in the manner described below. In another embodiment, a user can override the operation of the automatic height adjustment assembly **100** by operating a user interface in the form of a switch, a remote control, a touch panel, or the like.

The automatic height adjustment assembly **100** includes a sensor system having three sensors **110, 112,** and **114.** In this embodiment, the three sensors are a laser sensor **110,** a first proximity sensor **112,** and a second proximity sensor **114.** In other embodiments, the three sensors can include optical sensors, light sensors, proximity sensors, motion sensors, reed sensors, acoustic sensors, camera sensors, imaging sensors, infrared light sensors, capacitive sensors, piezoelectric sensors, radar sensors, sonar sensors, ultrasonic sensors, distance measuring sensors, or the like, provided the sensors are capable of detecting the workpiece **W** and its position relative to the saw blade **108.** In other embodiments, the sensor system can include more or fewer than three sensors.

The automatic height adjustment assembly **100** also includes a controller **116,** a motor **118,** and a user interface **119.** The laser sensor **110,** the first proximity sensor **112,** and the second proximity sensor **114** are configured to detect the presence of a workpiece **W** and are operatively connected so as to transmit signals to the controller **116.** The first and second proximity sensors **112, 114** are configured to detect the presence of a workpiece **W,** and more particularly to detect the leading edge of the workpiece in immediate proximity to the sensor. Since the sensors **112, 114** need only detect the passage of the bottom of the workpiece directly adjacent the opening **107** the sensors may have a very limited range. In the case of an optical sensor, the optical beam can be narrowly focused at the particular location of the proximity sensor to limit the range of the sensor to slightly more than the thickness of the table top at the opening **107..** In at least one embodiment, only one sensor **112** or **114** is used to detect the presence of or the leading edge of the workpiece **W.**

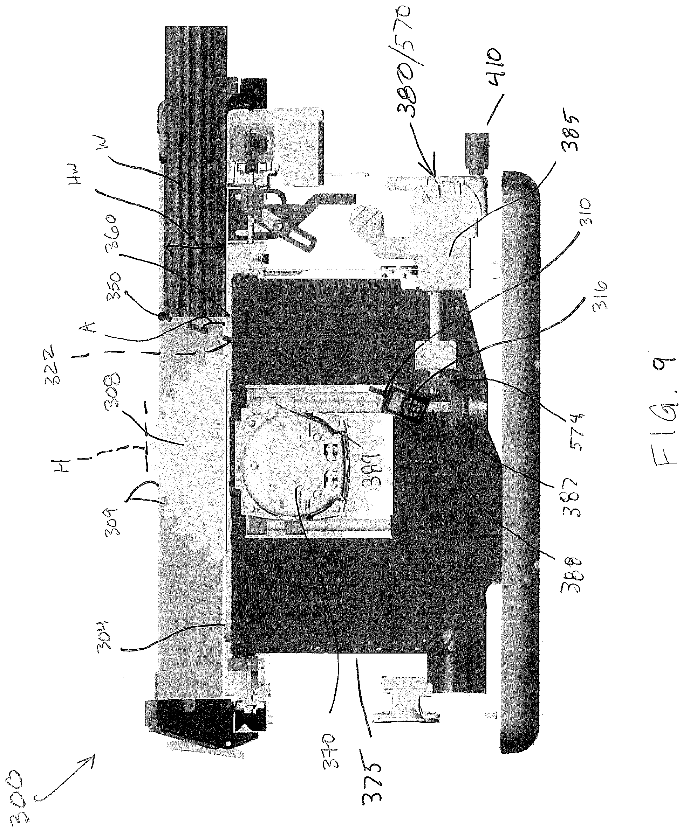

The controller **116** is operatively connected to the motor **118** so as to operate the motor **118** to move the saw blade **108** relative to the work surface **104** of the table top **102.** Although not shown in **FIG. 2** for clarity, the motor **118** is operatively coupled to the carriage **12** that supports the saw blade **108** and its drive motor in such a manner as to move the carriage and saw blade upwardly or downwardly without interfering with the operation of the saw blade **108.** For example, in one embodiment, the motor **118** may be operatively coupled to rotate the gearing of the height adjustment assembly **14** shown in **FIG. 1****,** replacing or at least over-riding the hand crank shown in the figure. An exemplary carriage **375** is shown in **FIG. 9** that supports a drive motor **370** and the saw blade **308,** as discussed in more detail herein. A height adjustment mechanism **380** may be provided with the manual crank **14** to permit manual adjustment of the blade height. The adjustment mechanism **380** includes gearing **385** that can be driven by the motor **118** for automatic blade height adjustment.

As depicted in **FIG. 2****,** the laser sensor **110** is positioned alongside the saw blade **108** below the rotation axis **120** of the saw blade. The position of the laser sensor **110** is in fixed relation to the saw blade **108** so that the laser sensor moves upwardly and downwardly with the saw blade **108** relative to the work surface. The laser sensor **110** may thus be mounted to the carriage supporting the saw blade. In alternative embodiments, the laser sensor **110** can be integrated into the saw blade **108** or can be fixedly mounted to a blade arbor along the rotation axis **120** of the saw blade **108.** The laser sensor **110** includes a laser emitter configured to emit a light beam **122** that passes through the saw blade opening **106** in a direction parallel to the plane of the saw blade **108** and at an angle **A** relative to the work surface **104.** The angle **A** is oriented so that the sensor **110** can detect when a workpiece **W** is aligned with the first proximity sensor **112.** The laser sensor **110** further includes a receiver that receives the reflected laser light and transmits a signal to the controller **116** indicating he presence or absence of an object in the path of the beam **122.**

The first proximity sensor **112** is positioned below the table top **102** at the saw blade opening **106** and arranged to emit a beam of light **124** that passes through the saw blade opening **106** in a direction substantially perpendicular to the work surface **104.** The first proximity sensor **112** is positioned near the front of the saw blade opening **107** so as to detect when a workpiece **W** is adjacent to but not yet in contact with the saw blade **108.** Upon detecting the reflected light beam **124,** the first proximity sensor **112** transmits a signal to the controller **116** indicating that it detects the presence of an object in the path of the light beam **124.**

The second proximity sensor **114** is positioned below the table top **102** at the saw blade opening **106** and is positioned nearer to the rotation axis **120** and farther from the front of the saw blade opening **107** than the first proximity sensor **112** - i.e., between the saw blade and the first sensor. The second proximity sensor is configured to emit a beam of light **126** that passes through the saw blade opening substantially perpendicular relative to the work surface **104** so as to detect when a workpiece **W** is being fed into contact with the saw blade **108.** Upon detecting the reflected light beam **126,** the second proximity sensor **114** is configured to transmit a signal to the controller **116** indicating that it detects the presence of an object in the path of the light beam **126.** The controller may be configured to commence a cutting operation (i.e., by activating the motor-driven cutting blade) if the second proximity sensor indicates the presence of the workpiece at that position.

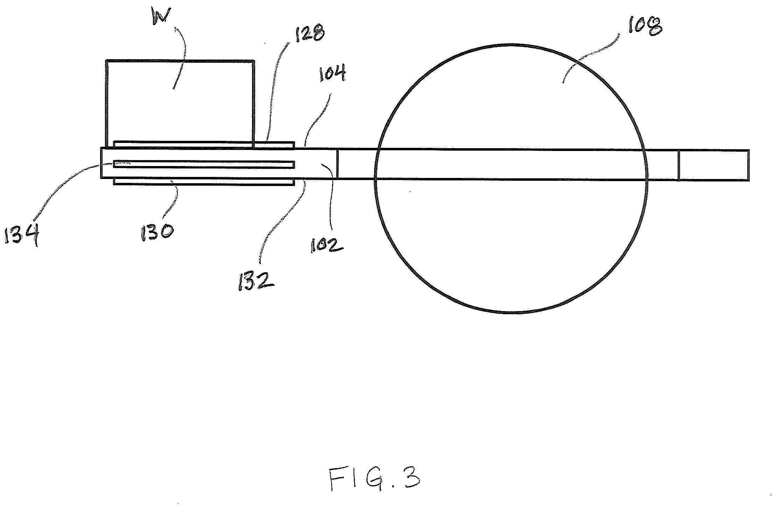

In an alternative embodiment, shown in **FIG. 3****,** the sensor system can include a sensor strip **128** applied on the work surface **104** of the table top **102,** a sensor strip **130** applied to the bottom surface **132** opposite the work surface **104** of the table top **102,** and/or a sensor strip **134** integrally formed within the table top **102** between the work surface **104** and the bottom surface **132.** The sensor strip(s) **128, 130,** and/or **134** are used to detect the presence of the workpiece **W.** The sensor strip(s) **128, 130,** and/or **134** can also be used to identify other properties of the workpiece **W** such as dimensions, material type, thickness, motion, and/or speed toward and away from the saw blade **108** of the workpiece **W.**

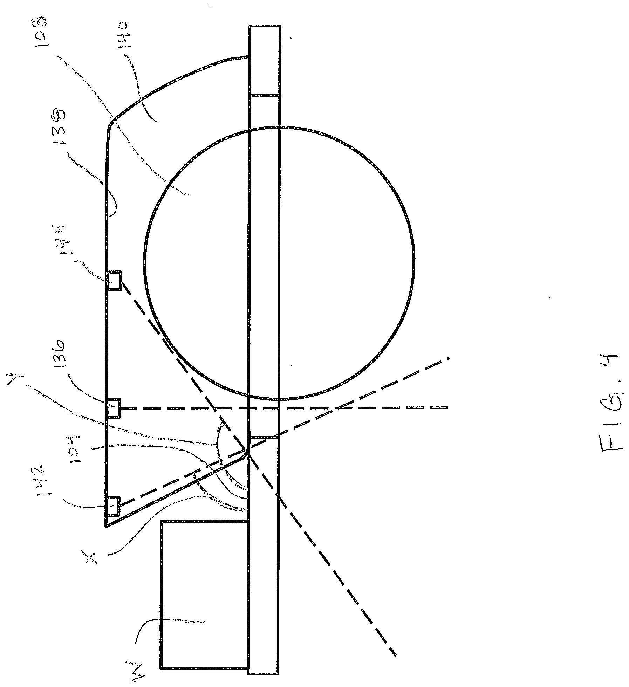

In another alternative embodiment, shown in **FIG. 4****,** the sensor system can include a sensor **136** mounted to a top panel **138** of a blade guard **140** and pointed in a direction substantially perpendicular to and downward toward the work surface **104,** a sensor **142** mounted to the top panel **138** of the blade guard **140** and pointed downward at an acute angle **X** relative to the work surface **104,** and/or a sensor **144** mounted to the top panel **138** of the blade guard **140** and pointed at an obtuse angle **Y** relative to the work surface **104.** The sensor(s) **136, 142,** and/or **144** may all be used to detect the presence of the workpiece **W** in lieu of the sensors **112, 114** of **FIG. 2****.**

Returning to **FIG. 2****,** the controller **116** is configured to receive signals transmitted by the laser sensor **110,** the first proximity sensor **112,** and the second proximity sensor **114** and to evaluate the signals according to a program or software instructions executed by the controller to determine whether to operate the motor **118** to move the saw blade **108** up or down relative to the work surface **104** to thereby increase or decrease the height **H** of the teeth **109** relative to the work surface **104.** The controller **116** may incorporate a memory configured to store information indicating the direction and/or magnitude of the last adjustment performed by the automatic height adjustment assembly **100.**

In a first example, shown in **FIGS. 2****,** **5** and **6****,** the controller **116** is shown operating the motor **118** to lower the saw blade **108** relative to the work surface **104** to decrease the height **H** of the teeth **109** relative to the work surface **104.** As shown in **FIG. 2****,** a workpiece **W** intercepts the light beam **124** emitted by the first proximity sensor **112** causing the sensor to send a signal to the controller that it has detected the presence of the workpiece **W** adjacent to the saw blade opening **106.** In response the controller can direct the user interface **119** to initiate a display to indicate to the tool operator that the workpiece is properly positioned for a height adjustment. For example, the display may be a red light or diode that is energized on the user interface **119** to provide the tool operator with a visual "stop" signal to induce the operator to hold the workpiece at the location as the system and controller perform additional steps. In this example, the workpiece **W** does not pass through the light beam **126** emitted by the second proximity sensor **114** so the controller does not commence the cutting operation.

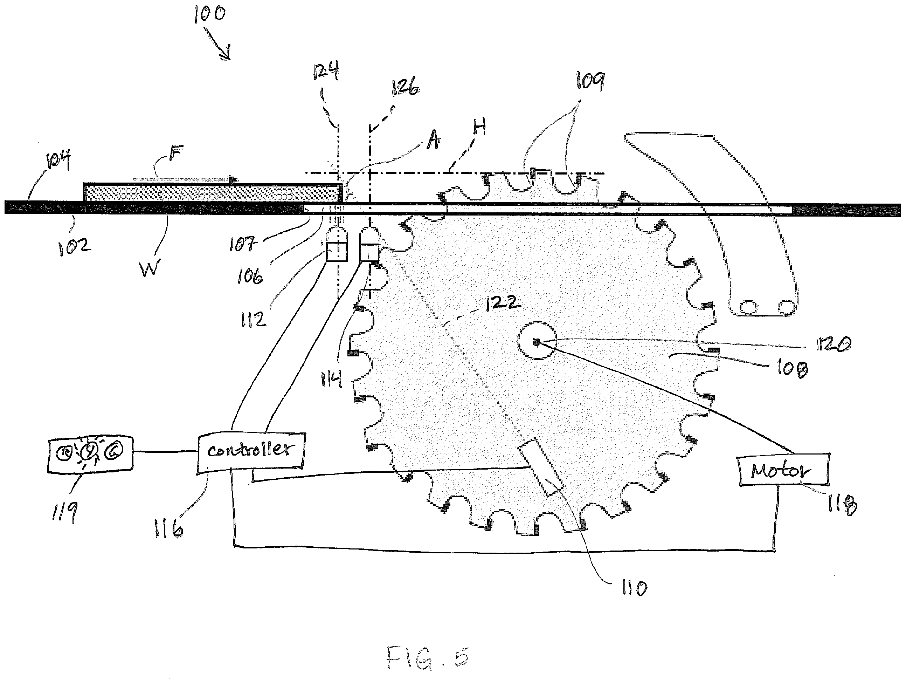

As shown in **FIG. 2****,** the workpiece **W** does not intersect the light beam **122** emitted by the laser sensor **110.** The sensor data transmitted to the controller is interpreted by the controller to indicate the presence of a workpiece and that the saw blade is positioned at a height that is above the maximum height of the workpiece. Accordingly, the controller **116** determines that the workpiece **W** is shorter than the current blade height **H** of the teeth **109** and that a blade height adjustment is required. The controller **116** directs the user interface **119** to display an indicator, such as a yellow light shown in **FIG. 5****,** signifying that a height adjustment has commenced and then begins to operate the motor **118** to move the saw blade **108** downwardly relative to the work surface **104.** The controller further stores information indicating that the blade movement is downward. In the position shown in **FIG. 5****,** the workpiece **W** also still does not intersect the light beam **122** emitted by the first laser sensor **110.** Accordingly, the controller **116** continues to indicate the presence of a workpiece **W** but that the workpiece **W** is still below than the blade height **H.** Thus, the yellow indicator on display **119** remains activated as the controller continues to operate the motor **118** to move the saw blade **108** downwardly relative to the work surface **104.** The yellow indicator provides a visual indication to the operator to still hold the workpiece in position. However, it is understood that the operator could override the height adjustment operation at any time by advancing the workpiece to intersect the beam **126** of the second proximity sensor **114,** in which case the controller can direct the saw blade to be activated.

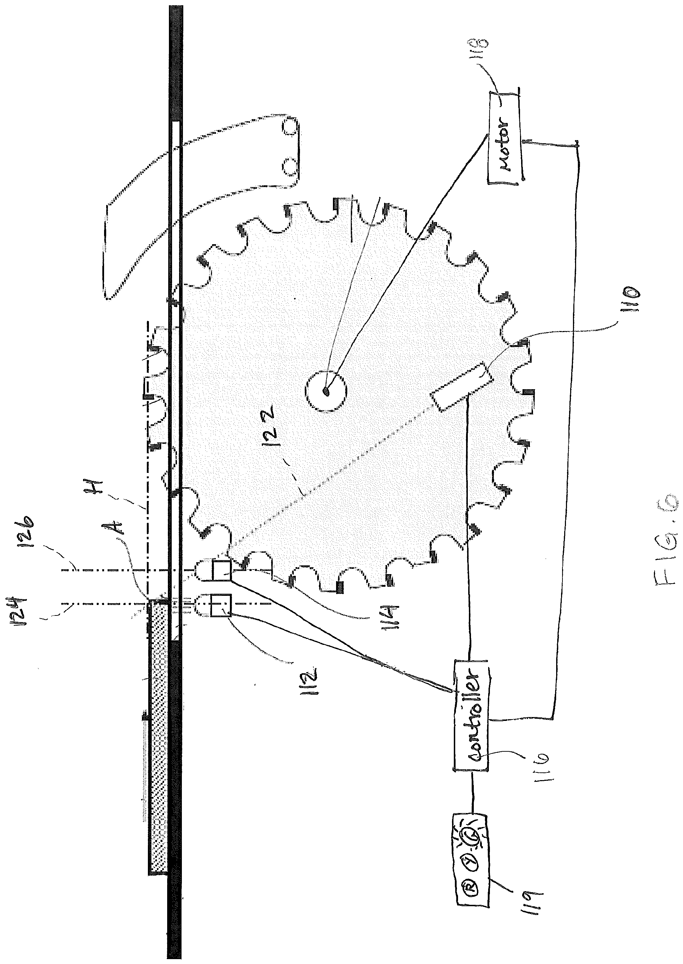

In the position shown in **FIG. 6** the workpiece **W** has now intersected the light beam **122** emitted by the laser sensor **110** so that the laser sensor **110** detects that the blade height is aligned with the maximum height of the leading edge of the workpiece **W** and transmits an appropriate signal to the controller. The controller **116** receives the transmitted signals and retrieves from memory the indication that the automatic height adjustment assembly **100** has been moving downwardly. Accordingly, the controller **116** determines that the height adjustment process is complete and that the cutting operation can commence. The controller can direct the user interface **119** to display an indicator, such as a green light or diode, signifying to the operator that the cutting operation can begin. The controller **116** further stops the motor **118** so that the saw blade **108** remains vertically fixed relative to the work surface **104.** Once the operator sees the green light on the user interface **119,** the operator can activate the drive motor for the saw blade **108.** Alternatively, the controller can be configured to automatically activate the saw blade once the height adjustment operation is completed. Or once the workpiece **W** has been moved to intersect the beam **126** of the second proximity sensor **114**

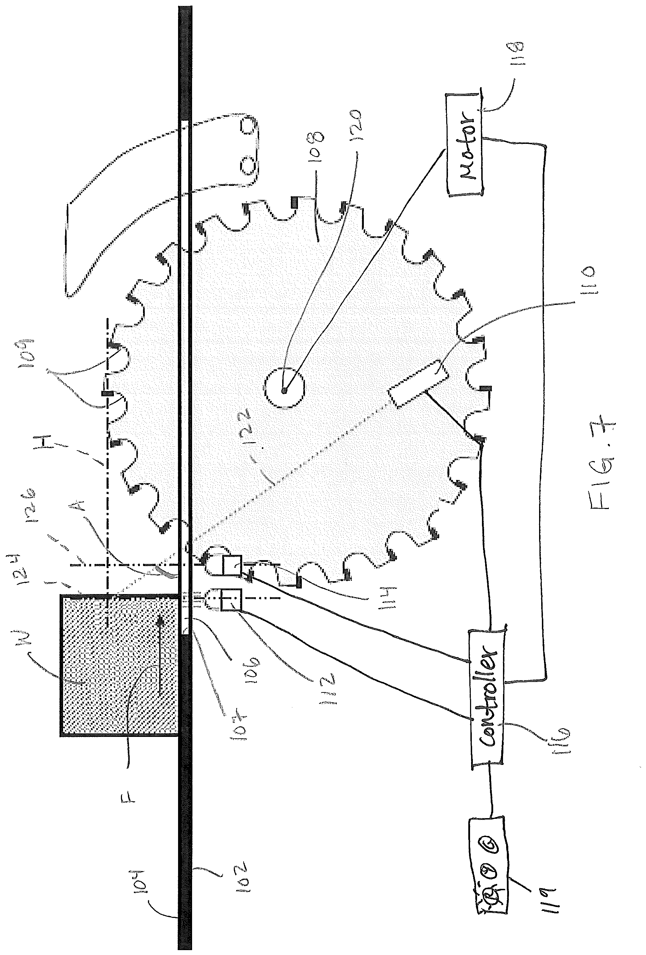

In certain instances, the maximum height of the leading edge of the workpiece is above the blade height. Thus, as shown in **FIG. 7****,** when the workpiece **W** is first advanced toward the opening **106,** the workpiece passes through the light beam **124** of sensor **112** and the light beam **122** of laser sensor **110.** The controller interprets the simultaneous signals from the two controllers as an indication that the workpiece is taller than the blade height **H** so that height adjustment is required. Moreover, based on these two sensor signals the controller **116** determines that the cutting blade needs to be raised, so the controller **116** activates the motor **118** to move the saw blade **108** upwardly relative to the work surface **104.** The controller operates in the same manner as described with respect to **FIGS. 5** and **6** until the beam **122** is no longer intersected by the leading edge of the workpiece. When the blade is being moved downward, the controller interprets the lack of signal from the sensor **110** as an indication that the blade has been lowered to a height that equals the height of the workpiece. At this point, the motor **118** is deactivated and the green light illuminated signaling to the operator that the workpiece can be advanced to the spinning saw blade.

In the examples, the blade height **H** is shown as generally vertically aligned or coincident with the maximum height of the leading edge of the workpiece **W.** In certain cutting operations it is desirable for the blade height to be greater than the workpiece height or thickness. For instance, in certain operations it is desirable for the blade height to be about 125% - 133% of the workpiece height/thickness. The controller may be configured to implement software that can determine the actual height of the workpiece **W** based on the final position of the laser sensor or saw blade after the blade height adjustment operation, and then calculate an offset blade height that is 25-33% greater than the actual height. The controller may then move the saw blade upward to the offset height prior to completion of the blade adjustment operation. Alternatively, the controller **116** may be configured to automatically move the blade upward a predetermined distance once the controller determines that the blade height equals the workpiece height. The user interface **119** may permit the operator to enter a value for a preferred height offset, which value is used by the controller software to direct the blade height adjustment operation.

As shown in **FIG. 2****,** for instance, the laser sensor **120** may be oriented at an angle **A** at which the light beam **122** passes through the intersection of the blade height **H** and the light beam **124** of the first proximity sensor. In this orientation, the blade height **H** will coincide with the height of the leading edge of the workpiece, as reflected in **FIG. 4****.** Alternatively, the laser sensor **110'** may be oriented at an angle **A'** that is shallower than the angle **A** so that the light beam **122'** intersects the first proximity sensor beam **124** at a position vertically lower than the blade height **H.** This modified laser sensor orientation essentially incorporates a fixed blade height offset. In other words, once the laser sensor at the modified angle reaches the upper edge of the workpiece, the actual blade height **H** will be above the workpiece by the predetermined offset, such as the 25-33% offset discussed above. It can be appreciated that the sensor **110'** may be oriented at a greater angle so that the light beam **122'** intersects the first proximity sensor beam **124** at a height that is less than the blade height **H.** In this instance, the saw blade would create a blind cut that does not pass entirely through the workpiece **W.**

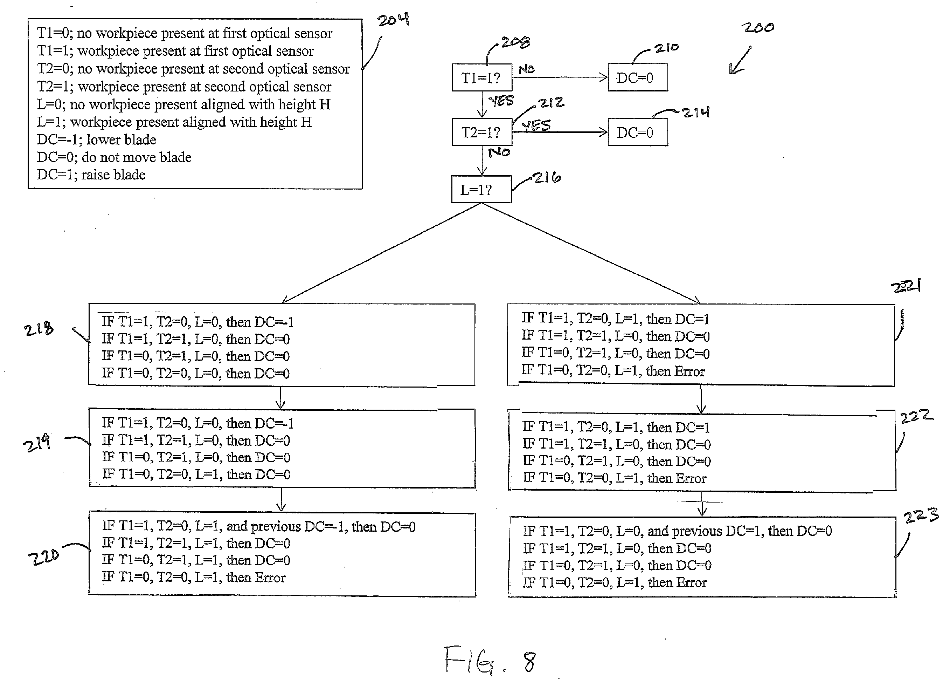

As shown in **FIG. 8****,** a software program **200** can be implemented by the controller **116** to control the motor **118** for moving the saw blade based on the signals from the proximity sensors **112, 114** and the laser sensor **110.** As shown in the table **204,** the first proximity sensor is designated **T1** and the second proximity sensor as **T2.** The two sensors generate a "0" or a "1" signal indicative of whether or not the workpiece is present at the location of the respective sensor. The laser sensor is designated as **L** in the table **204** and also generates a "0" or a "1" based on whether or the workpiece intersects the beam **122.** The controller generates a motor control signal **DC** that can be null (0) for no activation of the motor **118,** -1 to operate the motor in one direction to lower the blade, and +1 to operate the motor in the opposite direction to raise the saw blade. In this embodiment, the motor **118** for moving the saw blade may be operated using digital signals. In alternative embodiments, the motor **118** can be operated using analog electrical signals or mechanical signals.

The program **200** first determines whether the first proximity sensor **112** detects the presence of a workpiece **W** (step **208**). If the first proximity sensor **112** does not detect a workpiece (**T1=0**), the control signal **DC** from controller **116** is null (0) so that the motor **118** is not activated (step **210**). If the first proximity sensor **112** does detect the presence of a workpiece (**T1=1**), the program **200** continues to determine whether the second proximity sensor **114** detects the presence of a workpiece **W** (step **212**). If the second proximity sensor **114** does detect the presence of a workpiece **W** (**T2=1**), the motor control signal **DC** is again null and the controller does not activate the motor **118** to move the saw blade **108** (step **214**). It is understood that a second sensor value **T2=1** means that the operator is moving the workpiece to the saw blade and a cutting operation is being performed, in which case the blade height cannot be adjusted.

If the second proximity sensor **114** does not detect the presence of a workpiece **W** in step **212,** the next determination is whether the laser sensor **110** detects the presence of a workpiece **W** (step **216**). The sensor values determine which of the outputs **218-223** is implemented, and in particular whether and in what direction the height adjustment motor **118** is activated. The outputs **218-220** correspond to the blade and laser sensor orientations shown in **FIGS. 2****,** **5****,** **6** in which the blade is lowered, while the outputs **221-223** correspond to **FIG. 7** in which the blade is raised. The output **218** corresponds to **FIG. 2** in which the workpiece is being moved toward the first proximity sensor **112** (**T1**). A motor command signal DC is only generated if **T1=1** and if **T2** and **L** are null, meaning that the workpiece is at the location of sensor **112** and have not been advanced toward the blade, and that the blade height is above the workpiece. In this instance, the motor command is **-1** signifying that the motor **118** is operated in the direction to lower the blade height. In all other conditions, specifically if **T1** is null or **T2=1,** the adjustment motor is not energized.

As the motor **118** operates to lower the saw blade, the controller produces output **219.** The motor control signal **DC** remains -1 (i.e., moving downward) so long as the laser sensor signal **L** and second proximity sensor signal **T2** remain null. However, once the blade height reaches the height of the workpiece, the laser sensor signal changes to **L=1,** in which case the controller switches the control signal **DC** to null. The saw blade and workpiece are now in the position shown in **FIG. 6** at which the blade height is adjusted to the workpiece height. Under all conditions the motor control signal **DC** is null or is changed to null. However, as reflected in output **220,** the control signal **DC** becomes null only if the previous **DC** was -1. This conditional takes into account that situation in which the workpiece is taller than the blade height (as in **FIG. 7**) which requires lowering of the workpiece. In this sequence the blade height **H** as been reduced so the new detection of the workpiece by the laser sensor means that the height adjustment is complete. It can be noted that if the laser sensor indicates the presence of a workpiece but neither of the proximity sensors show a workpiece, an error condition is noted and the height adjustment motor is de-energized. In this condition, the blade drive motor may also be de-energized.

The outputs **221-223** correspond to adjusting the blade height upward as depicted in **FIG. 7****.** The output protocol is similar to the outputs **218-220,** except that the motor control signal **DC** is +1, rather than -1, so that the motor **118** moves the blade upward to increase the blade height. In the output **223,** once the laser sensor no longer detects the workpiece the controller determines that the height of the workpiece has been reached and then so long as the motor had been driving the blade upward (**DC=1**) the motor control signal **DC** is made null.

It is understood that the program **200** and the outputs **218-223** can be readily implemented in a microprocessor using C++ programming language. Alternatively, a more sophisticated controller may incorporate the program steps of **FIG. 8** as well as perform the height offset calculations described above. Additionally, alternative programming languages can be used.

Turning now to **FIG. 9****,** an automatic height adjustment assembly **300** is depicted. The automatic height adjustment assembly **300** is substantially similar to the automatic height adjustment assembly **100** described above except that the assembly **300** includes only one sensor device used to detect the presence of the workpiece **W.** In this embodiment, the sensor device is a laser sensor **310.** The controller **316** that receives signals from the laser sensor **310** is mounted to the carriage **375** that supports the saw blade **308** and drive motor **370.** As in the assembly **100,** the laser sensor is oriented at an angle **A** relative to the plane of the work surface **304** and is aligned to pass through the saw blade opening. More specifically, the laser sensor **310** is arranged so that the light beam **322** first detects a top leading edge **350** of the workpiece **W** as it is fed toward the blade **308.** In this embodiment, the laser sensor **310** is capable of generating a distance value from the sensor to the detected object. Upon detecting the top leading edge **350,** the laser sensor **310** generates a first signal (i.e., **L=1** in **FIG. 8**) to the controller **316** indicating the presence of the workpiece, as well as a distance value D1. A time value Time1 is also generated corresponding to the time at which the top leading edge **350** is detected. The time value Time1 may be generated by the controller **316.**

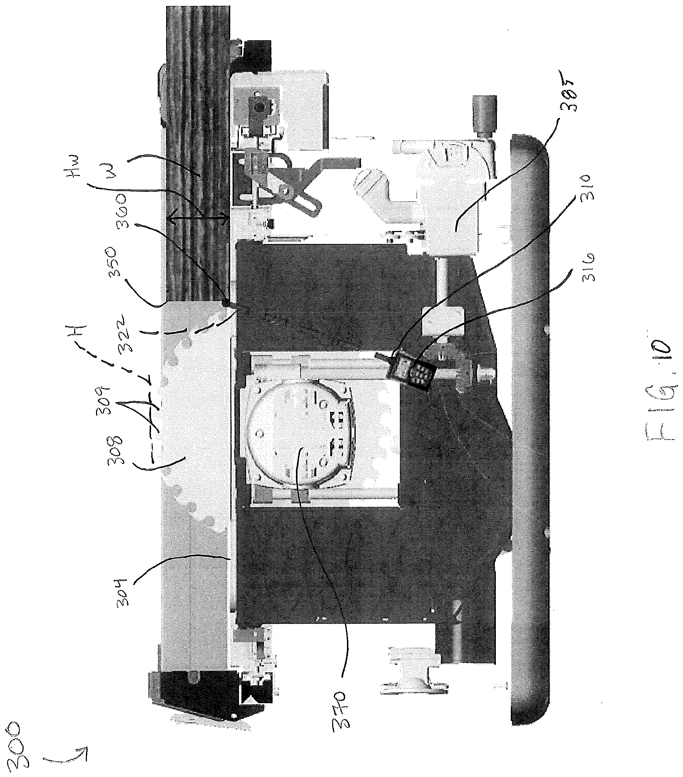

As shown in **FIG. 10****,** as the workpiece **W** is further fed toward the saw blade **308,** the light beam **322** emitted by the laser **310** then detects the presence of the bottom leading edge **360.** Upon detecting the bottom leading edge **360,** the laser sensor generates a distance value D2 and a time value Time2 is generated by the controller. It can be appreciated that at this point the laser sensor is also still generating a detection value **L=1** because the workpiece is still intercepting the light beam **322.** Once the bottom leading edge is detected further movement of the workpiece toward the blade does not produce any change in the distance value. Once the controller determines that the distance detected by the laser sensor is unchanged the distance value D2 can be assigned.

The controller **316** is configured to evaluate the first signal and the second signal to determine the workpiece height **H**_{w}, specifically using the distance values D1 and D2. As shown, the angle **A** of the light beam **322** is known and the difference between distances D1 and D2 is known so the workpiece height can be calculated using the equation H_{w} = sin(A)*(D2-D1). Once the controller **316** has determined the workpiece height **H**_{w}, the controller **316** operates the motor to move the saw blade **308** relative to the work surface **304** such that the blade height **H** of corresponds to the workpiece height **H**_{w}. It can be appreciated that the starting blade height is known so that the controller can determine whether the blade adjustment requires upward or downward movement. As discussed above, a blade height offset may be desirable, in which case the controller **316** may automatically apply the correction as the blade is moved to the desired height.

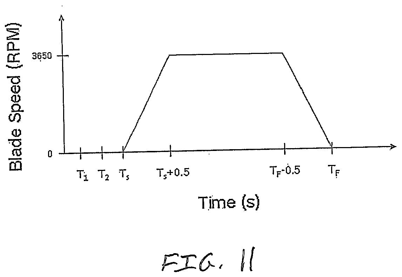

Additionally, the controller **316** can determine the velocity V_{w} at which the workpiece **W** is being fed toward the saw blade **308.** Again, the angle **A** of the light beam **322** is known and the difference between distances D1 and D2 is known. Accordingly, the controller **316** calculates the workpiece velocity V_{w} using the equation: V_{w} = ((D2-D1)*cos(A))/(T2-T1). With the workpiece velocity V_{w}, the controller **316** can control the saw blade motor **370** to adjust the rotational speed of the saw blade **308** according to a predetermined speed profile, such as the profile shown in **FIG. 11** that is expedient to the user. Thus according to the profile in **FIG. 11****,** the blade may be actuated at a predetermined start time after Time**2**, with the motor speed gradually increasing to a desired operating speed. The laser sensor remains operative as the cut is being made so that once the trailing end of the workpiece passes from the light beam **322** the sensor **320** sends a null signal **L=0** to the controller which initiates the shut-down sequence. According to the profile in **FIG. 11****,** the blade runs at its full operating speed for a predetermined delay after time after which the blade speed is gradually reduced until the drive motor **370** is de-energized at time Tf.

Both the automatic height adjustment assembly **100** and the automatic height adjustment assembly **300** can be overridden by a user who either disables the automatic height adjustment assembly **100, 300** or who feeds the workpiece **W** into the saw blade **108, 308** without waiting for the height adjustment sequence to commence. As explained above, with respect to the assembly **100,** detection by the second proximity sensor **T2=1** prevents activation of the height adjustment motor and signals that the user is overriding the adjustment sequence. Alternatively, the controller may be provide the ability to turn the auto-adjust feature on or off, or may be configured to allow over-riding a default condition of automatic blade height adjustment. The user is still able to adjust the height of the teeth of the saw blade using a manual crank.

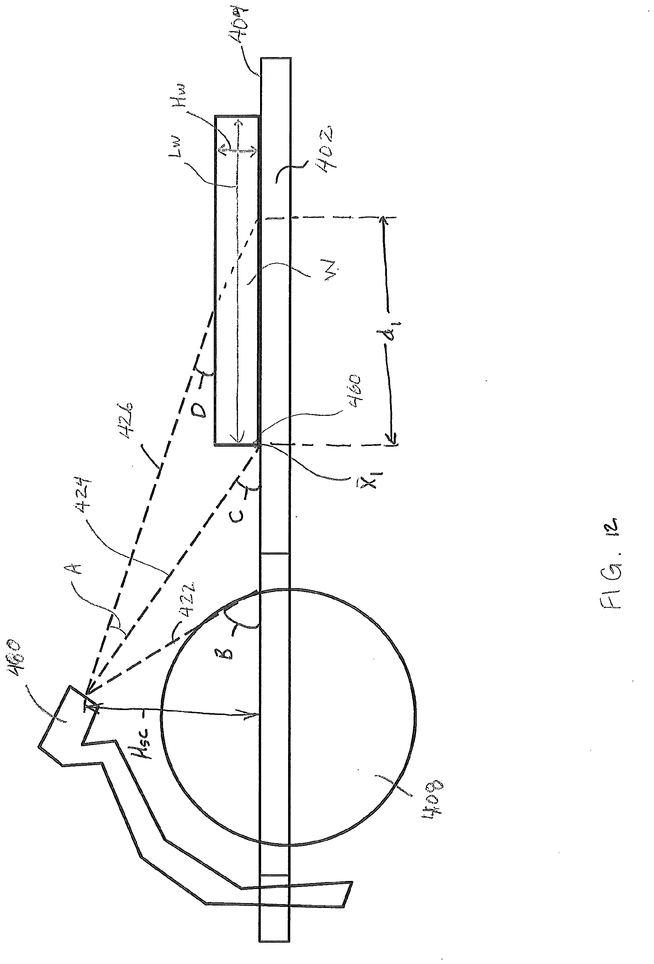

Turning now to **FIGS. 12-14****,** an automatic height adjustment assembly **400** is depicted that is operable to not only adjust the blade height but also to sense workpiece length and detect when a cut is complete. The automatic height adjustment assembly **400** is substantially similar to the automatic height adjustment assembly **300** described above except that the assembly **400** includes a sensor compartment **480** positioned above the saw blade **408** and housing three sensor devices used to detect the presence and dimensions of a workpiece. In this embodiment, the three sensor devices are each laser sensors configured to emit a beam of light **422, 424,** and **426,** respectively. In alternative embodiments, however, the sensor devices can be another type of sensor as indicated above. The sensor compartment **480** is mounted to the carriage that supports the saw blade **408** and drive motor such that the sensor compartment **480** moves vertically with the saw blade **408.** As in the assembly **300,** the sensor devices are oriented at angles such that the beams of light **422, 424,** and **426** are oriented at fixed angles **B, C** and **D,** respectively, relative to the plane of the work surface **404.** Because the angles **C** and **D** are known, the angle **A** between the beams **424** and **426** is known. Thus, because the angles **A, C** and **D** are known, the distance **d₁** between the beams of light **424** and **426** on the work surface **404** is known when the height **H**_{sc} of the sensor compartment **480** relative to the work surface is known.

As shown in **FIG. 12****,** the sensor compartment **480** is arranged so that the light beam **424** detects a bottom leading edge **460** of the workpiece **W** as the workpiece **W** is fed toward the blade **408.** Upon detecting the bottom leading edge **460,** the sensor device that emits light beam **424** generates a distance value **X1** and sends a corresponding signal to the controller. A time value Time1 is also generated corresponding to the time at which the bottom leading edge **460** is detected. The time value Time1 may be generated by the controller.

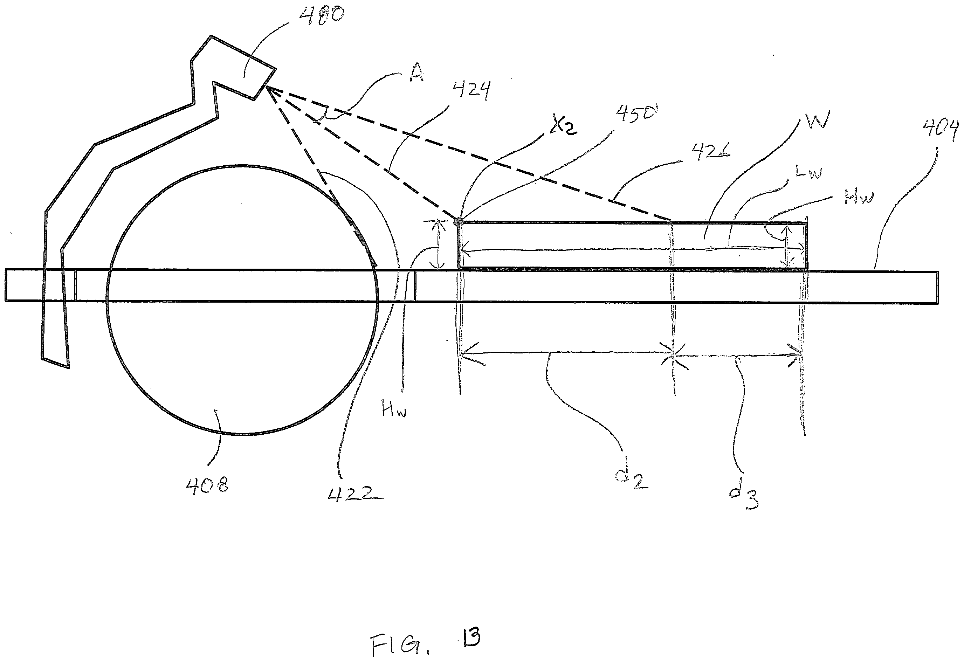

As shown in **FIG. 13****,** as the workpiece **W** is further fed toward the saw blade **408,** the light beam **424** then detects the presence of the top leading edge **450.** Upon detecting the top leading edge **450,** the sensor device that emits light beam **424** generates a distance value **X2** and sends a corresponding signal to the controller and a time value Time2 is generated. When the signal corresponding to the distance value **X2** is transmitted to the controller, the controller begins operating the sensor device that emits light beam **422** to act as an automatic shut-off. Once the sensor device that emits the light beam **422** is activated, a detected absence of a workpiece **W** following a detected presence of a workpiece **W** by the light beam **422** will cause the sensor device that emits light beam **422** to send a signal to the controller initializing a speed reduction or automatic shut-off protocol for the saw blade motor. Additionally, when the signal corresponding to the distance value **X2** is transmitted to the controller, the controller also begins operating the sensor device that emits light beam **426** to detect an absence of the workpiece **W.**

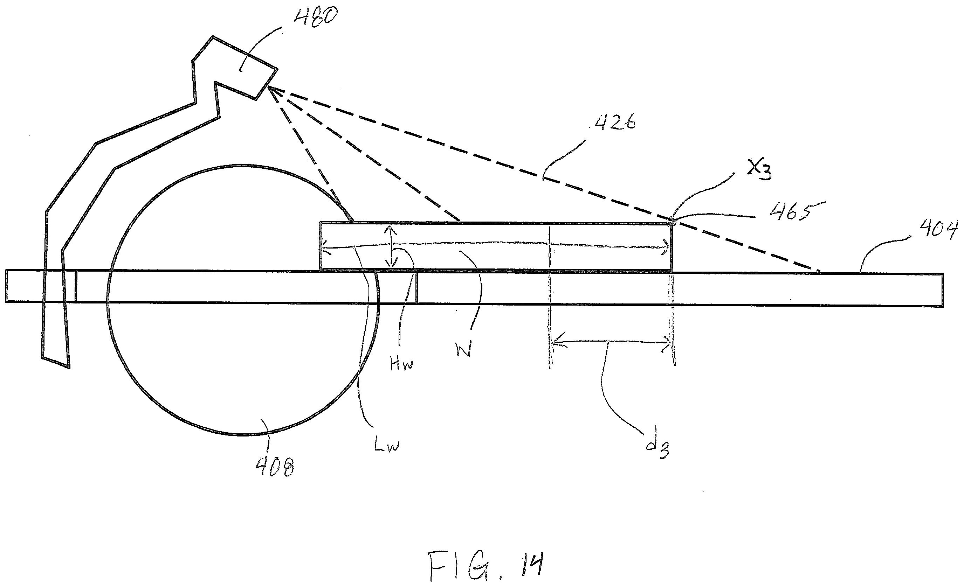

Turning now to **FIG. 14****,** as the workpiece **W** is further fed toward the saw blade **408,** the light beam **426** then detects the absence of the workpiece **W** once the top trailing edge **465** of the workpiece **W** passes through the beam. Upon detecting the top trailing edge **465,** the sensor device that emits light beam **426** generates a distance value **X3** and sends a corresponding signal, and a corresponding time value Time3 is generated.

In operation, the controller is configured to evaluate the signals generated by the sensor device that emits light beam **424** using the values **X1** (shown in **FIG. 12**) and **X2** (shown in **FIG. 13**) to determine the workpiece height **H**_{w} as described above. The controller is also configured to operate the motor to move the saw blade **408** relative to the work surface **404** such that the height of the saw blade **408** corresponds to the workpiece height **H**_{w}. Once the controller determines the workpiece height **H**_{w}, the controller is also configured to determine a distance d₂ (shown in **FIG. 13**) between the light beams **424** and **426** based on similar triangles. Specifically, the controller applies the ratio of (H_{sc} to d**₁**) to (H_{sc}-H_{w} to d**₂**) to find d**₂**. The controller is also configured to determine the workpiece velocity V_{w} using the values **X1** and **X2** as described above. Once the controller determines the workpiece velocity V_{w}, the controller is also configured to determine a distance **d₃** (shown in **FIG. 14**) using the time values Time2 and Time3. Specifically, V_{w}*(Time3-Time2)=d**₃** because the velocity V_{w} multiplied by the time it took the workpiece to move from the detection of the top leading edge **450** to the detection of the top trailing edge **465** yields the distance d**₃**. Finally, the controller is configured to determine a length of the workpiece L_{w} by adding **d₂** and **d₃.** The length information can be used in a speed reduction or shut-off protocol based on the workpiece velocity V_{w} and an elapsed time from the workpiece position shown in **FIG. 14****.**

The automatic blade height adjustment assemblies disclosed herein can be incorporated into a variety of power tools and integrated with existing mechanical or manual blade height adjustment mechanisms. In addition, the assemblies may utilize different proximity sensors capable of determining the proximity of a workpiece, with the type of sensor modified in accordance with the material of the workpiece. For instance, a capacitive sensor may be used for a metal workpiece. The sensors may be "touchless" or may be mechanical trip type sensors. The location and positioning of the proximity sensors and laser sensor may be adjusted to the specific set-up of the power tool.

It is contemplated that the automatic height adjustment assemblies disclosed herein may be incorporated into a complete automation and control system for all aspects of the operation of a power tool or bench top tool. For instance, the assemblies may be integrated with components operable to: a) sense workpiece material to adjust blade operating parameters; b) determine and/or automatically adjust blade bevel angle; c) determine and/or automatically the position of a riving knife and/or blade guard; and/or d) detect and mitigate blade kick-back conditions. All of these components may cooperate to improve safety, convenience, performance, precision, quality and reliability of the operation of the power tool. The integrated system may also provide data for external access to monitor the performance of the power tool and/or to track and record cutting operations performed with the tool.

Exemplary features of the disclosed automatic height adjustment assembly include at least one sensor component, a control unit, and a driving unit. The at least one sensor component is, for example, a sensor, the control unit is, for example, a controller, and the driving unit is, for example, a motor. The at least one sensor component and the driving unit are operatively coupled to the control unit. The at least one sensor component is arranged relative to the power tool so as to detect the presence and outside boundaries of a workpiece adjacent to the saw blade. Upon detecting the presence and outside boundaries of a workpiece, the at least one sensor component transmits signals to the control unit. The control unit processes the transmitted signals to determine whether to operate the driving unit to raise or lower the height of the saw blade relative to the work surface.

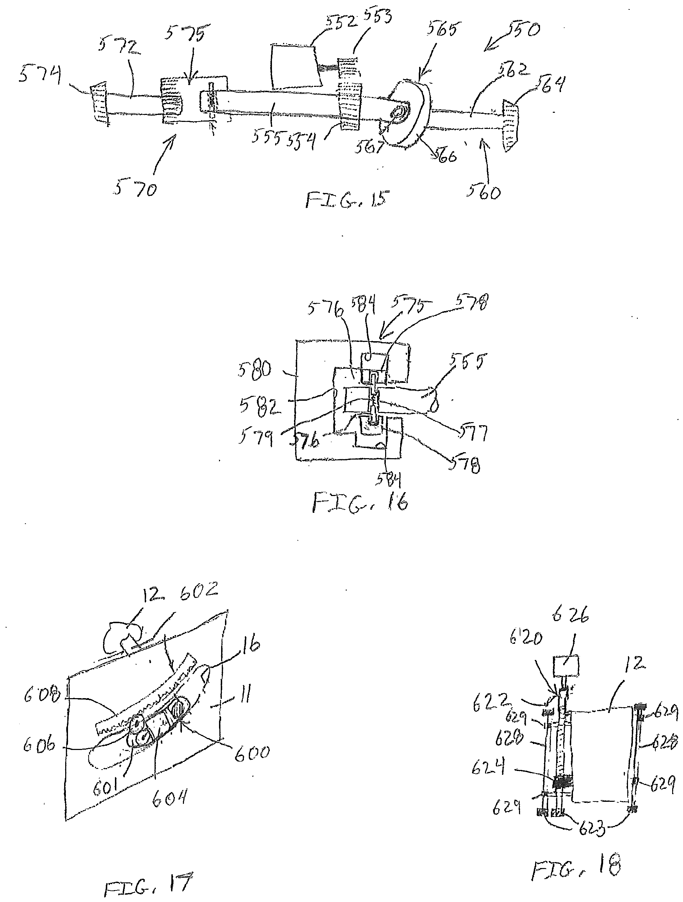

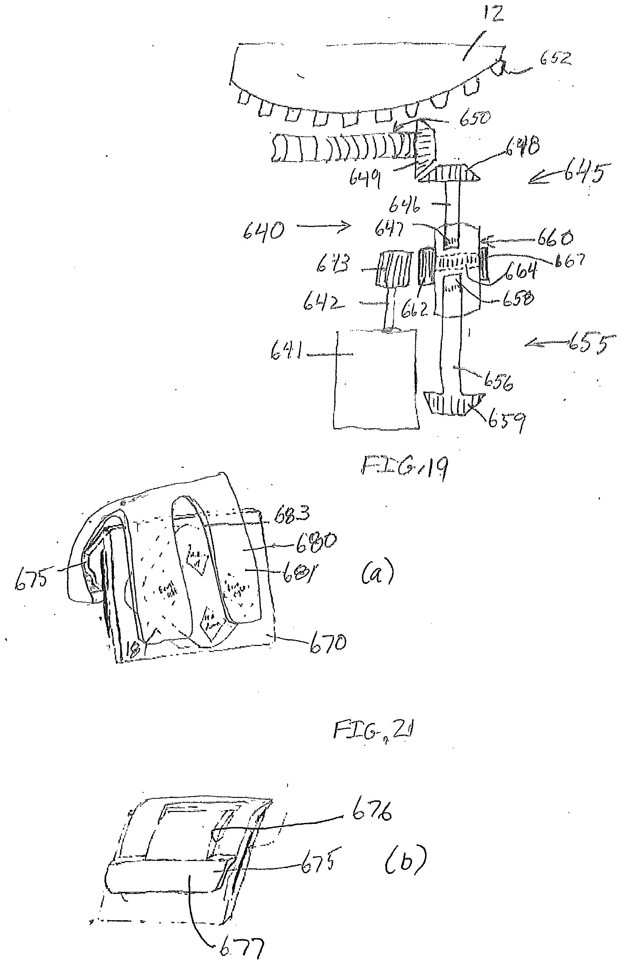

In another aspect of the present disclosure, a combined height and bevel adjustment mechanism **550** is provided a shown in **FIGS. 15-16****.** In this mechanism, a motor **552** drives an output gear **553** that meshes with an input gear **554** fixed to an input shaft **55.** The motor may be a reversible electric motor that is configured to permit adjustment of the motor speed and torque to thereby control the speed and torque applied to the input gear **554.** The input shaft **555** is adapted to provide speed and torque to a bevel adjustment component **560** and a height adjustment component **570.** The bevel adjustment component **560** includes an output shaft **562** that drives an output gear **564.** The output gear **564** is configured to engage a gear arrangement associated with the carriage **12** (**FIG. 1**) to tilt the carriage at a desired bevel angle. In one example, the output gear **564** may be a bevel gear that engages a bevel gear **649** that drives a worm gear **650** as depicted in **FIG. 19****.** The worm gear **650** engages teeth **652** on the carriage to tilt the carriage. It is understood that the gear arrangement may instead be associated with the table **11** to tilt the work surface **T.** Moreover, the bevel adjustment component **560** may be integrated with other forms of adjustment mechanisms, such as a lever-mechanism, a worm drive or other types of mechanisms.

In one feature of the combined adjustment mechanism **550,** the output shaft **562** of the bevel adjustment component **560** is connected to the input shaft **555** through a torque-limiting coupling **565.** The coupling **565** may include, for instance, a slip clutch **566** maintained in contact by a constant force spring **567** mounted on the input shaft **555.** The slip clutch **566** and spring **567** are calibrated so that the slip clutch elements (or plates) remain in contact up to a pre-determined torque, as established by the constant force spring. (It can be appreciated that the rotational inertia of the bevel adjustment gearing that meshes with the output gear **564** also contributes to establishing a torque threshold value). Power is transmitted from the motor **552** to the input shaft **555** and to the output shaft **562** of the bevel adjustment component **560** as long as the transmitted torque is below the threshold torque value. Once the torque applied to the torque limiting coupling **565** exceeds the rated torque of the coupling, the output shaft **562** slips and no power is transmitted to the output gear **564** at which point the bevel adjustment feature stops. Consequently, whether or not the bevel adjustment component is activated depends upon the output torque of the motor **552,** which is controllable by the operator. The operator control of the motor torque may be limited to actuating a bevel adjustment switch. In one embodiment, the power switch **P** (**FIG. 1**) may be modified to include left and right arrows and a horizontal toggle element for activating the bevel adjustment. However, preferably a separate switch is provided to activate the bevel adjustment such as by sending a control signal or controlled electrical current to the motor **552** sufficient to cause the motor to operate at a predetermined torque that is below the slip torque of the torque limiting coupling **565.**

The adjustment system **550** further includes a height adjustment component **570** that may be powered by the same motor **552** and input shaft **555** as the bevel adjustment component. Thus, the height adjustment component includes an output shaft **572** that drives an output gear **574** that meshes with suitable gearing to move the carriage **12** up and down to adjust the saw **S** height relative to the work surface **T.** In one example, the output gear **574** is a bevel gear that engages a mating bevel gear **387** of the height adjustment system **380** shown in **FIG. 9** used to adjust the blade height relative to the workpiece as described above. The mating gear **387** drives a lead screw **388** that engages a threaded collar **389** of the carriage **370.**

Power is transmitted from the input shaft **555** to the output shaft **572** through a centrifugal coupling **575.** The centrifugal coupling **575** includes a number of pins **576** that extend through one or more cross-bores **577** defined in the input shaft **55.** Opposite pins may be connected by an extension spring **579** configured to draw the pins together inside a corresponding cross-bore. Centrifugal masses **578** are mounted to the radially outboard end of the pins **576.** The pins and masses rotate with the input shaft **555** and as they rotate the masses move outward due to the centripetal force, resisted by the spring **579.**

The centrifugal coupling **575** includes a transmission housing **580** that is engaged to or integral with the output shaft **572** so that output shaft and housing rotate together. The housing defines a cavity **582** that receives the end of the input shaft **555** as well as the centrifugal masses **578.** The housing **580** further defines recesses **584** aligned with each centrifugal mass and sized to receive the mass **578** when they extend outward enough to engage the recess. Once engaged in the recess the rotation of the input shaft **555** is transmitted through the pins **576** and centrifugal masses **578** to the recesses **584** and to the housing **580** to thereby rotate the output shaft **572.** It can be appreciated that the spring **577** between the pins **576** can be calibrated to determine the centripetal force, and therefore rotational speed, necessary for the centrifugal masses **578** to engage the recesses **584.** Thus, whether or not the motor **552** drives the output gear **574** of the height adjustment component **570** depends upon the speed of the motor, which can be controlled by the operator. As with the bevel adjustment feature, the operator control may be in the nature of a vertical toggle at the power switch **P.** However, it is again preferable that a separate switch be provided as described above which activates the motor **552** to operate at the pre-determined rotational speed to activate the centrifugal coupling **575.**

It can be appreciated that the adjustment system **550** combines the ability to adjust both bevel angle and height of the tool, such as the saw **S,** relative to the work surface **T** (whether by moving the saw or moving the work surface). Operating the motor **552** at low speeds and low torque activates the bevel adjustment component, while operating the same motor at high speeds activates the height adjustment component. It can be noted that the speed and torque relationships may be modified according to the properties of the power tool adjustment elements which may give rise to certain speed/torque thresholds. It is contemplated that the torque limiting coupling **565** of the bevel adjustment component **560** may be replaced with a centrifugal de-coupling device similar to the centrifugal coupling **575** of the height adjustment component. For the bevel adjustment component, the centrifugal coupling would be arranged so that the centrifugal masses disengage the input shaft at high rotational speeds.

In another adjustment system, the bevel angle and height adjustments are accomplished with different motors. Thus, as shown in **FIG. 17****,** a bevel adjustment component **600** includes a housing **601** that is connected to the carriage **12** supporting the working tool **S** by a beam **602.** The housing **601** carries a motor **604** that drives a gear train **606.** The motor may be a reversible motor and may have a fixed operating speed or a controllable speed. The gear train **606** meshes with a curved rack gear **608** that is fixed to the tool housing **11.** The rack gear follows the curvature of the slot **16** defined in the housing **11** for the power tool (**FIG. 1**). The housing **601** for the bevel adjustment component **600** is configured to be slidably engaged within the slot **16** so that the housing follows the slot as the gear train **606** moves along the fixed rack gear **608.** The motor **604** may be coupled to the power switch **P** with modifications to accommodate a horizontal toggle or to a separate switch as described above.

The adjustment system further includes the height adjustment component **620** that includes a threaded rod **622** that carries a driven member **624** that is coupled to the carriage **12** to raise or lower the carriage as the driven member travels along the rod. The driven member includes internal threads to mesh with the threaded rod **622.** The threaded rod is rotatably driven by a motor **626** that is separate from the motor **604** for the bevel adjustment component. Bearing supports **623** are provided to support the threaded rod. The height adjustment component may further include, for instance, a pair of glide shafts (or other glide mechanisms) **628** with slide elements **629** connected to the carriage **12** to help maintain smooth vertical movement of the carriage as the rotation of the threaded rod drives the driven member **624** up or down. As with the bevel adjustment component, the motor **626** of the height adjustment component **620** may be connected to the power switch **P** and in particular to a vertical toggle to allow independent operation of the height adjustment feature.

An alternative combined adjustment system **640** is shown in **FIG. 19** in which a common motor **641** drives either of the bevel adjustment component **645** or the height adjustment component **655.** The motor **641** has an output shaft **642** coupled to a driven gear **643** that engages a slide actuated clutch **660** to alternatively transfer power to one of the two adjustment components **645, 655.** The bevel adjustment component **645** includes a shaft **646** with an input gear **647** at one end and an output gear **648** at an opposite end. The output gear **648** meshes with a gear **649** that drives a worm gear **650.** The gears **648, 649** are preferably bevel gears, but other gears may be employed. The worm gear **650** engages teeth **652** that are part of or connected to the carriage **12** that supports the saw **S** and its drive motor. It can thus be appreciated that rotation of the shaft **646** causes rotation of the worm gear which rotates the carriage to adjust the bevel angle.

The height adjustment component **655** also includes a shaft **656** with an input gear **658** at one end and an output gear **659** at its opposite end. The output gear **659** is configured to engage a gear train configured to raise and lower the carriage **12.** The slide actuated clutch includes a transfer gear **662** that meshes with the driven gear **643** of the motor **641.** The transfer gear rotates an intermediate gear **664** that can be moved into engagement with either input gear **647** of the bevel adjustment component **645** or the input gear **658** of the height adjustment component **655.** A slide switch **667** is provided to physically slide the intermediate gear toward one or the other of the input gears. The slide actuated clutch **660** may include a housing with detents for receiving and holding the switch **667** and/or intermediate gear **664** in engagement with the selected adjustment component. The clutch **660** may also incorporate a locking element that locks the shaft **646, 656** of the non-selected adjustment component against rotation, to thereby hold the adjustment component, and therefore the carriage, at the chosen bevel angle or height.

The slide clutch **660** may be modified so that the input gears **647, 658** of the two adjustment components are slidably mounted on their respective shaft **646, 656** and keyed for rotation with the shaft. The switch **667** is then operable to slide one or the other input gear along their respective shaft and into engagement with the intermediate gear **664.** As a further alternative, the two input gears **647, 658** may be moved into and out of direct engagement with the driven gear **643** of the motor **641.**

The adjustment systems **550, 600, 620** and **640** are motor driven so that fine adjustments of bevel angle and/or height can be obtained. The motors may incorporate appropriate gearing to calibrate the motor rotational speed to a desired adjustment accuracy, taking into account motor start-up/shut-down characteristics as well as gear meshing or clutch activation characteristics.

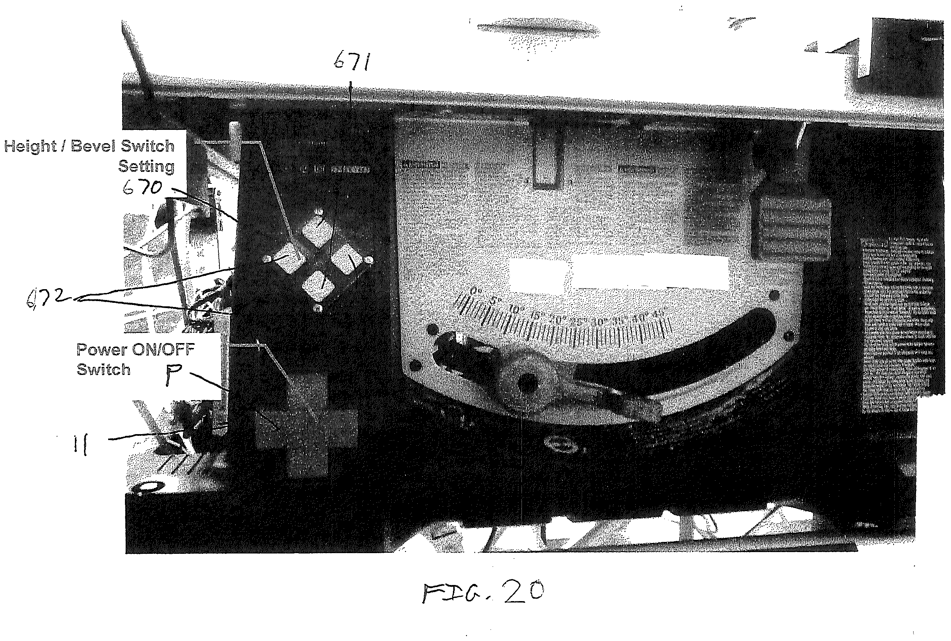

As indicated above, the bevel and height adjustment features may be activated by a separate power switch. For example, as depicted in **FIG. 20** a switch **670** may be mounted to the power tool table or housing **11** near the power switch **P.** The switch **670** includes height adjustment pads **671** arranged vertically on the switch and bevel adjustment pads **672** arranged horizontally on the switch. The switch pads may activate a toggle switch or may constitute a standard pressure switch pad.

In an alternative the switch **670** may be incorporated into or mounted on the existing mechanical bevel adjustment component **15 (****FIG. 1****).** The switch in this alternative can accommodate a bevel lock system, as illustrated in **FIGS. 21(a)****-(b)** that is operable before the motor **641** is disengaged from the shaft **646** of the bevel adjustment component **645.** As shown in **FIG. 21(a)** a clip **675** is provided that is engaged over the switch **670** and that includes a cover plate **680** having wings **681** separated by a slot **683.** The wings are positioned to cover the horizontal toggle switches used to activate the bevel adjustment feature. The slot **683** allows access to the vertical adjustment toggle switches. The cover plate **680** or clip **675** may provide other features in addition to acting as a lock for the switch **670,** such as a function selector for the user and an actuator for the slide clutch **660.** In this latter function, the clip **675** may be configured with an opening **676** that is configured to engage an complementary configured portion of the slide clutch **660** to allow the clutch to be moved side-to-side (as described above) by movement of the clip **675** or cover plate **680.**

The clip **675** may be configured as shown in **FIG. 21(b)** in a manner that physically locks the bevel adjustment mechanism **15** in place. The clip **675** may include a rear friction plate **677** that is adapted to frictionally engage the inside of the housing **15** adjacent the slot **16** to physically hold the mechanism in position.

Each of the components may be integrated with components for identifying the relative tool/blade position, such as height and bevel angle. Thus, the adjustment systems may integrate with a display that provides a visual indication of a tool angle relative to the work surface, or a relative tool height. Various sensors may be used to evaluate the actual tool/blade position, such as the sensors **110, 112, 114** discussed above. The position data may also be used to provide a feedback component in which an operator inputs a desired height or bevel angle and the adjustment components operate until the sensors indicate that the desired position has been achieved. The position data feedback can be part of a fully automated system or may be integrated with visual/audible feedback when the adjustment is manually controlled by the operator. The position or movement of the adjustment components may alternatively be determined directly from the motor such as when the motor is a stepper motor or when the drive shaft or driven gear are encoded, wherein gear rotation is translated to a specific height or angle adjustment from a known location.

It is contemplated that the adjustment systems disclosed herein may be incorporated into a complete automation and control system for all aspects of the operation of a power tool or bench top tool. For instance, the systems may be integrated with components operable to: a) sense workpiece material to adjust blade operating parameters; b) determine and/or automatically adjust blade bevel angle; c) determine and/or automatically the position of a riving knife and/or blade guard; d) automatically adjust blade or tool height; and/or e) detect and mitigate blade kick-back conditions. All of these components may cooperate to improve safety, convenience, performance, precision, quality and reliability of the operation of the power tool. The integrated system may also provide data for external access to monitor the performance of the power tool and/or to track and record cutting operations performed with the tool. A user interface may be provided that permits user input for desired operating features of the power tool, such as a touch screen or PC interface.

The present disclosure contemplates an adjustment system for adjusting the position of a tool relative to the work surface of a portable or bench top power tool. The system includes a bevel adjustment component and a height adjustment component driven by a common motor. A coupling between the motor and both the adjustment components selectively engages one of the components with the motor to perform the corresponding adjustment feature. The coupling may be a torque limiting clutch, centrifugal clutch or slide actuated clutch. The coupling may be selectively engage one adjustment component or another as a function of selected motor operation parameters, such as speed and torque. As indicated above, the mechanical safety features, such as the riving knife, provide a great deal of protection for the tool operator while a cut is being performed on a workpiece. However, once the cut is complete the operator's attention may be directed away from the rotating saw blade **108,** even if only momentarily.

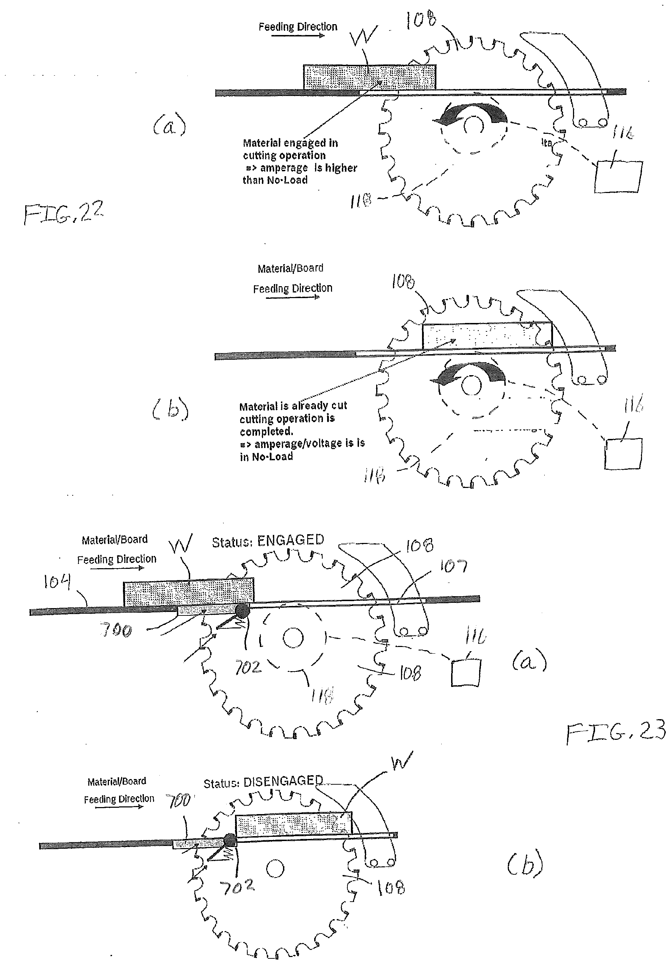

According to a further feature of the present disclosure, systems are provided for automatically shutting down the drive motor for the saw blade. In one embodiment shown in **FIGS. 22(a)****-(b)** the drive motor **118** powering the blade **108** is controlled by a controller **116 (****FIG. 2****).** The controller **116,** which may be part of the automatic height adjustment system **100** described above, is configured to sense certain operating conditions of the motor and to permit or terminate power to the motor **118.** One operating condition of the drive motor **118** is the current draw of the motor. A typical drive motor for a power tool has a known current draw under no-load conditions (i.e., when the driven blade is freely spinning) and a known current draw when the motor is loaded, such as when the drive saw blade is in contact with a workpiece **W** as shown in **FIG. 22(a)****.** The motor current may also have a known value after a cut has been completed but while the workpiece **W** is still adjacent the saw blade **108,** as shown in **FIG. 22(b)****.** It is known that the motor current draw is greater during load operation than during no-load operation of the motor. Another motor operating condition may include the motor voltage, which may change between load and no-load operation. A physical differentiation condition may be the mechanical and audio vibration of the drive assembly or motor that can differ between no-load and cutting operation of the tool.

The controller **116** is configured to sense the motor operating condition, such as the current draw, while the motor **118** is operating. For instance, the controller may incorporate a known current sensor to determine the current draw of the motor. When the sensed current is at the load condition current the controller "knows" that the cutting operation is in process because the workpiece **W** is loading the drive motor for the cutting blade **108,** as shown in **FIG. 22(a)****.** However, once the cut is complete, as shown in **FIG. 22(b)****,** the current draw decreases and this change is sensed by the controller **116.** The controller thus determines that the cut is complete and disengages the drive motor **118,** such as by deactivating an internal switch that cuts power to the motor. In addition, the controller may activate a braking component to help decelerate and stop the blade in a short period of time.

In one aspect, the controller **116** may be configured to operate as a go/no-go gage, meaning that while the motor operating condition is at a predetermined level electrical power is supplied to the motor, but once the operating condition falls below that predetermined level electrical power to the motor is terminated. In this instance, the current sensor may be a solenoid switch that is deactivated if the current falls below the solenoid threshold. In another alternative, the controller **116** may incorporate a current sensor capable of real-time evaluation of the current magnitude for comparison at short intervals. In this alternative, the controller may determine a current delta or differential, by comparing the motor current at one time interval to either a nominal operating current or to the motor current at an immediately prior time interval. If the motor current delta falls outside a predetermined threshold, the controller terminates power to the drive motor. In yet another alternative, the motor operating condition protocol may be established "on the fly", meaning that the motor operating conditions sensed when the cutting operation is commenced are used as the initial conditions to which subsequent motor conditions are compared.

Another automatic speed regulation /speed reduction /shut-off system may incorporate a mechanical component, such as the component **700** associated with the work surface **104** adjacent the leading end of the blade slot **107** and cutting blade **108,** as depicted in **FIGS. 23(a), (b).** The mechanical component **700** may take several forms capable of sensing physical contact and generating a signal that is used by the controller **116** to deactivate the drive motor **118.** For example, the component **700** may have a capacitive touch system, a projective touch system, or a touch sensitive surface, similar to touch pad of computer keyboard or the like. The component **700** may be an element induced by external stimulus such as magnetic field, temperature, light, or the like. Alternatively the component **700** may be in the form of a pressure switch that makes or breaks an electrical contact depending upon whether a workpiece **W** is positioned on the switch. The pressure switch may take on various forms, such as the spring biased ball **702** depicted in **FIG. 23(a)****.** As a further alternative, the component **700** may be a resistance or capacitive element that is capable of determining material density. With this alternative, the controller **116** may use the material density information to regulate the speed of the blade during the cutting operation that is most appropriate to the density of the workpiece material. As shown in this figure, when the workpiece is present the ball **702** is depressed into or below the work surface **104.** In this position the ball may close a switch so that a "workpiece present" signal is transmitted to the controller **116.** However, once the cut is complete the workpiece has moved beyond the ball **702** so that the spring pushes the ball upward, as shown in **FIG. 23(b)****.** In this position the ball breaks the switch contact and this condition is sensed by the controller **116** to terminate power to the motor **118.**

As can be appreciated form **FIG. 23(b)****,** the mechanical component **700** is preferably positioned to overlap the cutting blade **108** since the workpiece **W** is not fully cut until the workpiece has traversed part of the blade. Consequently, the component **700** may be oriented lateral adjacent the blades slot **107.** The component may be disposed on one side of the slot or may straddle the slot. In some embodiments, the component may be integrated into the table top or the frame. In other embodiments, the component is a sensor package with a housing and the package housing is formed as part of the table top or the frame. In yet other embodiments, the component is a sensor strip disposed around the periphery of the blade slot **107.** As shown in **FIG. 23(a)** the component may extend beyond the leading end of the slot **107,** depending upon the form of the component. Even if the component **700** includes the ball sensor **702,** several such mechanical elements may be dispersed around the slot **107.** Providing additional mechanically sensed surface area around the cutting blade reduces the risk of a false negative or a false positive.

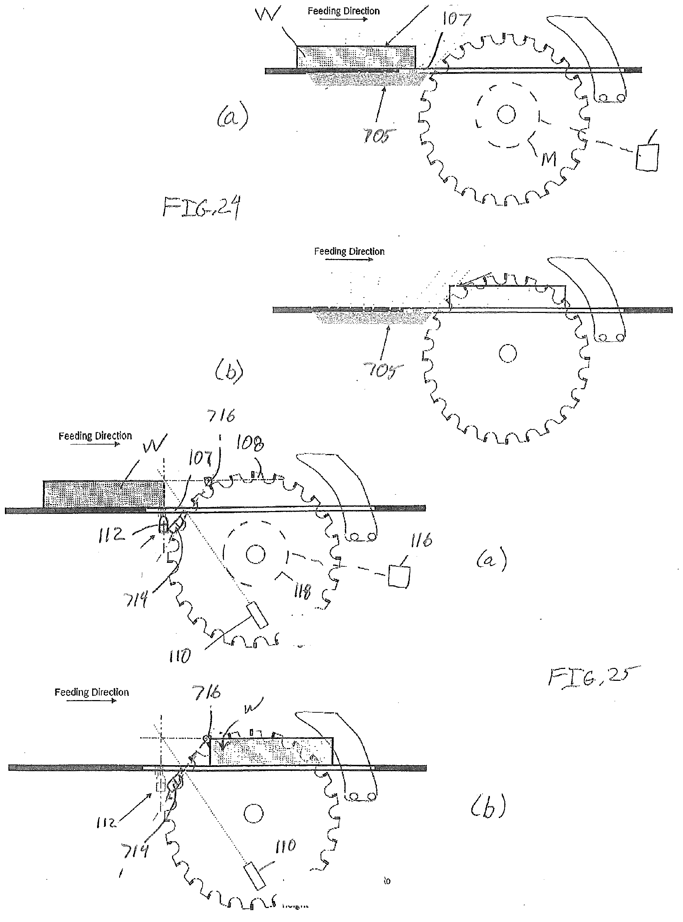

In the embodiment shown in **FIGS. 24(a)****, (b)** the power tool is provided with a material sensor **705** that is configured to sense the material of the workpiece **W.** The sensor **705** is a non-contact sensor, meaning that it relies upon the transmission and reception of a beam, such as a light beam, or a wave, such as an electromagnetic field. The sensor **705** may be part of a system for controlling the motor operation based on the type of material encountered by the cutting blade **108.** For an automatic shut-off feature the controller **116** only requires some signal from the sensor, independent of information related to the material of the workpiece. As shown in **FIG. 24(a)****,** the sensor **705** may overlap the slot **107,** and depending upon the type of sensor may require access through the slot to "see" the workpiece **W.**

The embodiment of **FIGS. 25(a)****, (b)** utilizes the sensors from the height adjustment system **100** described above, namely the proximity sensors **112, 114** and the laser sensor **110.** As with the material sensor **705,** the controller **116** only requires a signal from either of the sensors **110, 112, 114** as an indication of the presence or absence of the workpiece **W.** In a modification of the system **100,** the downstream sensor **114** is modified so that the beam is at an a non-perpendicular angle. In particular, the sensor **714** is aligned to emit a beam through the blades slot **107** toward a predetermined location **716** that is calibrated to the location at which the workpiece has been fully cut by the saw blade. The controller **116** may thus rely upon the signal from the sensor **714** to indicate when the workpiece cut is complete, and rely upon the signal from either sensor **110** or sensor **112** to indicate that a cut is in process. While the sensors are providing a signal the controller **116** can keep the drive motor **118** energized. It can be appreciated that the sensors **110,112** will sense an absence of a workpiece once the workpiece moves past the leading end of the blades slot **107,** but while the workpiece is still in contact with the blade. Thus, the controller will only rely upon the signal from sensor **714** to activate the automatic shut-off feature.

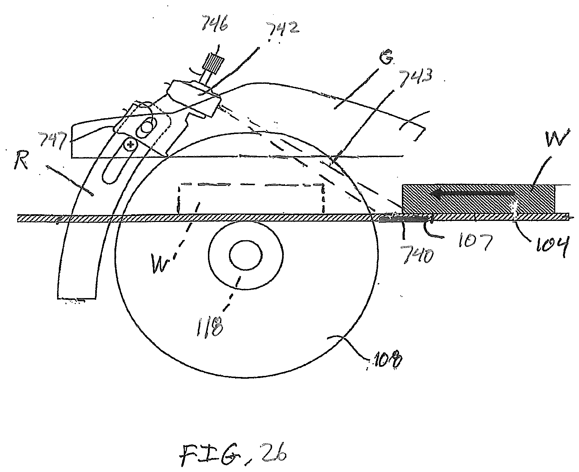

The automatic speed adjustment/shut-off feature may be incorporated into other safety features of the power tool, such as in association with the riving knife **R** and/or upper guard **G,** as shown in **FIG. 26****,** that are arranged to protect the blade **108.** In this embodiment, a sensor **740** is positioned at the leading end of the blade slot **107.** An optical source **742** is mounted on the riving knife **R,** as illustrated, or on the guard **G,** so that an optical beam **743** is directed at the sensor **740.** The optical source **742** may include adjustment components **746, 747** to properly align the beam **743** to shine directly onto the sensor. When the workpiece **W** overlaps the sensor **740** it interrupts the beam **743** so that the sensor transmits a signal indicative of the presence of a workpiece entering the cutting region of the tool. Once the cut is complete, the workpiece **W'** no longer intersects the beam **743** so the sensor transmits a signal indicating that a workpiece is no longer within the cutting region, thereby initiating the automatic speed reduction/shut-off feature described above.

The sensor and optical source can be of any type capable of sending and receiving a narrow or collimated beam. The sensor **740** may be a variety of optical sensors, such as a CCD array, a pixel-based sensor plate, and the like. The optical source and sensor may be configured for various light wavelengths, such as infrared or visible spectrum light. The optical device **742** is illustrated in **FIG. 26** as mounted on an existing safety component (i.e., riving knife **R**) of the power tool; however, the optical device may be carried by a separate support component that is mounted on the power tool, clear of the workpiece, but arranged to direct a beam **743** onto the sensor **740.**

It can be appreciated that the automatic shut-off features disclosed herein may be used in combination with a system for controlling the overall operation of the power tool, both from a performance and a safety standpoint. The controller **116** may be thus be part of an overall system controller or may be directly associated with the drive motor. It is contemplated that the controller is activated immediately when the operator activates the power tool, such as by actuating the power switch for the unit. The controller **116** may prevent activation of the drive motor unless and until a workpiece is sensed at the leading end of the blade slot **107,** or may integrate with other controllers that control activation of the drive motor as part of other features, such as height adjustment, safety component detection, and the like.

While the invention has been illustrated and described in detail in the drawings and foregoing description, the same should be considered illustrative and not restrictive in character.

## Claims

1. A power tool having a height adjustment system (100), a table with a work surface (104) for supporting a workpiece (W), a saw blade (108) extending through a slot in the table surface, a carriage supporting the saw blade (108) and a motor (118) for driving the saw blade (108), and an adjustment mechanism (380) for adjusting the height of the saw blade (108) above the surface, the height adjustment system comprising:
an adjustment motor (118) configured to drive the adjustment mechanism (380) to increase or decrease the height of the saw blade (108) relative to the work surface (104);
a movable sensor (110) movably supported relative to the table and movable in response to movement of the adjustment mechanism (380), the movable sensor (110) configured to direct a movable sensing beam at a non-perpendicular angle relative to the work surface (104), the beam passing through a position above the work surface (104) at a predetermined location along the work surface (104) that is calibrated to the height of the saw blade (108), the movable sensor (110) further configured to generate a movable sensor (110) signal in response to the detection of the workpiece (W) in the path of the movable sensing beam; and
a controller (116) configured for controlling the adjustment motor (118) to change the height of the saw blade (108) relative to the work surface (104) in response to said movable sensor (110) signal, wherein
the movable sensor (110) is movable in response to movement of the adjustment mechanism (380) to change said position above the work surface (104);
**characterized in that** the controller (116) is configured to cause the adjustment motor (118) to drive the adjustment mechanism (380) until the upper edge of a workpiece (W) at said predetermined location is detected in response to the movable sensor (110) signal.

2. The power tool of claim 1, wherein the controller (116) is configured to detect the upper edge of the workpiece (W) in response to a change of state of the movable sensor (110) signal between detecting and not detecting the workpiece (W) in the path of said movable sensing beam.

3. The power tool of claim 1, further comprising:
a first sensor (112) at said predetermined location and configured to direct a first sensing beam upward through the slot substantially perpendicular to the work surface (104) to intersect said movable sensor (110) beam and to generate a first sensor (112) signal in response to the detection of the workpiece (W) in the path of said first sensing beam, and
wherein the controller (116) is configured to control the adjustment motor (118) in response to said movable sensor (110) signal only upon receipt of said first sensor (112) signal.

4. The power tool of claim 3, further comprising:
a second sensor (114) at a location between the saw blade (108) and said predetermined location, said second sensor (114) configured to direct a second sensing beam upward through the slot substantially perpendicular to the work surface (104) and to generate a second sensor (114) signal in response to the detection of the workpiece (W) in the path of said second sensing beam; and
wherein said controller (116) is configured to stop the adjustment motor (118) upon receipt of said second sensor (114) signal.

5. The power tool of claim 1, further comprising:
a user interface (119) operable to generate a stop signal directing the user to stop moving the workpiece (W) and a go signal directing the user to move the workpiece (W) to the saw blade (108); and
said controller (116) is configured to direct the user interface (119) to generate the stop signal upon receipt of said first sensor (112) signal and to direct the user interface (119) to generate the go signal in response to detection of the upper edge of the workpiece (W).

6. The power tool of claim 1, wherein said movable sensor (110) is movable in response to movement of the adjustment mechanism (380) so that said position of said movable sensing beam is maintained equal to the blade height.

7. The power tool of claim 1, wherein said movable sensor (110) is movable in response to movement of the adjustment mechanism (380) so that said position of said movable sensing beam is maintained equal to a predetermined percentage of the blade height.

8. The power tool of claim 1, wherein said controller (116) is further configured to determine a workpiece (W) velocity in response to detection by said movable sensor (110) of the upper edge and the lower edge of the workpiece (W) as it moves toward the saw blade (108).

## Patentansprüche

1. Elektrowerkzeug mit einem System (100) zur Einstellung der Höhe, einem Tisch mit einer Arbeitsfläche (104) zum Tragen eines Werkstücks (W), einem Sägeblatt (108), das sich durch einen Schlitz in der Tischfläche erstreckt, einem Wagen, der das Sägeblatt (108) trägt, und einem Motor (118) zum Antreiben des Sägeblatts (108), und einem Einstellmechanismus (380) zum Einstellen der Höhe des Sägeblatts (108) über der Fläche, wobei das System zur Einstellung der Höhe umfasst:
einen Einstellmotor (118), der ausgelegt ist, den Einstellmechanismus (380) anzutreiben, um die Höhe des Sägeblatts (108) relativ zu der Arbeitsfläche (104) zu vergrößern oder zu verkleinern;
einen bewegbaren Sensor (110), der bewegbar relativ zum dem Tisch getragen wird und ansprechend auf eine Bewegung des Einstellmechanismus (380) bewegbar ist, wobei der bewegbare Sensor (110) ausgelegt ist, einen bewegbaren Abtaststrahl unter einem nicht-rechtwinkligen Winkel relativ zu der Arbeitsfläche (104) zu lenken, wobei der Strahl durch eine Position über der Arbeitsfläche (104) an einem vorherbestimmten Ort entlang der Arbeitsfläche (104) hindurchgeht, die auf die Höhe des Sägeblatts (108) kalibriert ist, wobei der bewegbare Sensor (110) ferner ausgelegt ist, ein Signal des bewegbaren Sensors (110) ansprechend auf die Detektion des werkstücks (W) in dem Weg des sich bewegenden Abtaststrahls zu generieren; und
eine Steuereinheit (116), die ausgelegt ist, den Einstellmotor (118) zu steuern, die Höhe des Sägeblatts (108) relativ zu der Arbeitsfläche (104) ansprechend auf das Signal des bewegbaren Sensors (110) zu ändern, wobei
der bewegbare Sensor (110) ansprechend auf eine Bewegung des Einstellmechanismus (380) bewegbar ist, um die Position über der Arbeitsfläche (104) zu ändern;
**dadurch gekennzeichnet, dass**:
die Steuereinheit (116) ausgelegt ist zu bewirken, dass der Einstellmotor (118) den Einstellmechanismus (380) antreibt, bis die obere Kante eines Werkstücks (W) an dem vorherbestimmten Ort ansprechend auf das Signal des bewegbaren Sensors (110) detektiert wird.

2. Elektrowerkzeug nach Anspruch 1,
wobei die Steuereinheit (116) ausgelegt ist, die obere Kante des Werkstücks (W) ansprechend auf eine Zustandsänderung des Signals des bewegbaren Sensors (110) zwischen dem Detektieren und Nicht-Detektieren des Werkstücks (W) in dem Weg des bewegbaren Sensorstrahls zu detektieren.

3. Elektrowerkzeug nach Anspruch 1, ferner umfassend:
einen ersten Sensor (112) an dem vorherbestimmten Ort, und der ausgelegt ist, einen ersten Abtaststrahl nach oben durch den Schlitz im Wesentlichen rechtwinklig zu der Arbeitsfläche (104) zu lenken, um den Strahl des bewegbaren Sensors (110) zu schneiden, und ein Signal des ersten Sensors (112) ansprechend auf die Detektion des Werkstücks (W) in dem Weg des ersten Abtaststrahls zu generieren, und
wobei die Steuereinheit (116) ausgelegt ist, den Einstellmotor (118) ansprechend auf das Signal des bewegbaren Sensors (110) nur beim Empfang des Signals des ersten Sensors (112) zu steuern.

4. Elektrowerkzeug nach Anspruch 3, ferner umfassend:
einen zweiten Sensor (114) an einem Ort zwischen dem Sägeblatt (108) und dem vorherbestimmten Ort, wobei der zweite Sensor (114) ausgelegt ist, einen zweiten Abtaststrahl nach oben durch den Schlitz im Wesentlichen rechtwinklig zu der Arbeitsfläche (104) zu lenken, und ein Signal des zweiten Sensors (114) ansprechend auf die Detektion des Werkstücks (W) in dem Weg des zweiten Abtaststrahls zu generieren; und
wobei die Steuereinheit (116) ausgelegt ist, den Einstellmotor (118) beim Empfang des Signals des zweiten Sensors (114) zu stoppen.

5. Elektrowerkzeug nach Anspruch 1, ferner umfassend:
eine Benutzerschnittstelle (119), die betreibbar ist, ein Stoppsignal, das den Benutzer anleitet zu stoppen, das Werkstück (W) zu bewegen, und ein Startsignal, das den Benutzer anleitet, das Werkstück (W) zu dem Sägeblatt (108) zu bewegen, zu generieren; und
wobei die Steuereinheit (116) ausgelegt ist, die Benutzerschnittstelle (119) anzuweisen, das Stoppsignal beim Empfang des Signals des ersten Sensors (112) zu generieren, und die Benutzerschnittstelle (119) anzuweisen, das Startsignal ansprechend auf die Detektion der oberen Kante des Werkstücks (W) zu generieren.

6. Elektrowerkzeug nach Anspruch 1,
wobei der sich bewegende Sensor (110) ansprechend auf eine Bewegung des Einstellmechanismus (380) bewegbar ist, so dass die Position des bewegbaren Abtaststrahls gleich der Blatthöhe gehalten wird.

7. Elektrowerkzeug nach Anspruch 1,
wobei der sich bewegende Sensor (110) ansprechend auf eine Bewegung des Einstellmechanismus (380) bewegbar ist, so dass die Position des bewegbaren Abtaststrahls gleich einem vorherbestimmten Prozentsatz der Blatthöhe gehalten wird.

8. Elektrowerkzeug nach Anspruch 1,
wobei die Steuereinheit (116) ferner ausgelegt ist, eine Geschwindigkeit des Werkstücks (W) ansprechend auf die Detektion der oberen Kante und der unteren Kante des Werkstücks (W) durch den bewegbaren Sensor (110) zu bestimmen, während sich dieses zu dem Sägeblatt (108) hin bewegt.

## Revendications

1. Outil électrique ayant un système de réglage de hauteur (100), une table avec une surface de travail (104) pour supporter une pièce à travailler (W), une lame de scie (108) s'étendant à travers une fente dans la surface de table, un chariot supportant la lame de scie (108) et un moteur (118) pour entraîner la lame de scie (108), et un mécanisme de réglage (380) pour régler la hauteur de la lame de scie (108) au-dessus de la surface, le système de réglage de hauteur comprenant :
un moteur de réglage (118) configuré pour entraîner le mécanisme de réglage (380) pour augmenter ou diminuer la hauteur de la lame de scie (108) par rapport à la surface de travail (104) ;
un capteur mobile (110) supporté de façon mobile par rapport à la table et mobile en réponse au mouvement du mécanisme de réglage (380), le capteur mobile (110) étant configuré pour diriger un faisceau de détection mobile selon un angle non perpendiculaire par rapport à la surface de travail (104), le faisceau passant à travers une position au-dessus de la surface de travail (104) à un emplacement prédéterminé le long de la surface de travail (104) qui est étalonnée à la hauteur de la lame de scie (108), le capteur mobile (110) étant configuré en outre pour générer un signal de capteur mobile (110) en réponse à la détection de la pièce à travailler (W) dans le trajet du faisceau de détection mobile ; et
un dispositif de commande (116) configuré pour commander le moteur de réglage (118) pour modifier la hauteur de la lame de scie (108) par rapport à la surface de travail (104) en réponse audit signal de capteur mobile (110),
le capteur mobile (110) étant mobile en réponse au mouvement du mécanisme de réglage (380) pour changer ladite position au-dessus de la surface de travail (104) ;
**caractérisé en ce que**
le dispositif de commande (116) est configuré pour amener le moteur de réglage (118) à entraîner le mécanisme de réglage (380) jusqu'à ce que le bord supérieur d'une pièce à travailler (W) à cet emplacement prédéterminé soit détecté en réponse au signal de capteur mobile (110).

2. Outil électrique selon la revendication 1, dans lequel le dispositif de commande (116) est configuré pour détecter le bord supérieur de la pièce à travailler (w) en réponse à un changement d'état du signal de capteur mobile (110) entre la détection et la non-détection de la pièce à travailler (W) dans le trajet dudit faisceau de détection mobile.

3. Outil électrique selon la revendication 1, comprenant en outre :
un premier capteur (112) au niveau dudit emplacement prédéterminé, et configuré pour diriger un premier faisceau de détection vers le haut à travers la fente sensiblement perpendiculaire à la surface de travail (104) pour couper ledit faisceau de capteur mobile (110) et pour générer un premier signal de capteur (112) en réponse à la détection de la pièce à travailler (W) dans le trajet dudit premier faisceau de détection, et le dispositif de commande (116) étant configuré pour commander le moteur de réglage (118) en réponse audit signal de capteur mobile (110) uniquement lors de la réception dudit premier signal de capteur (112).

4. Outil électrique selon la revendication 3, comprenant en outre :
un second capteur (114) au niveau d'un emplacement entre la lame de scie (108) et ledit emplacement prédéterminé, ledit second capteur (114) étant configuré pour diriger un second faisceau de détection vers le haut à travers la fente sensiblement perpendiculaire à la surface de travail (104) et pour générer un second signal de capteur (114) en réponse à la détection de la pièce à travailler (W) dans le trajet dudit second faisceau de détection ; et
ledit dispositif de commande (116) étant configuré pour arrêter le moteur de réglage (118) lors de la réception dudit second signal de capteur (114).

5. Outil électrique selon la revendication 1, comprenant en outre :
une interface utilisateur (119) pouvant fonctionner pour générer un signal d'arrêt conduisant l'utilisateur à arrêter le déplacement de la pièce à travailler (W) et un signal « aller » conduisant l'utilisateur à déplacer la pièce à travailler (W) vers la lame de scie (108) ; et
ledit dispositif de commande (116) étant configuré pour diriger l'interface utilisateur (119) afin de générer le signal d'arrêt lors de la réception dudit premier signal de capteur (112) et pour diriger l'interface utilisateur (119) pour générer le signal « aller » en réponse à la détection du bord supérieur de la pièce à travailler (W).

6. Outil électrique selon la revendication 1, dans lequel ledit capteur mobile (110) est mobile en réponse au mouvement du mécanisme de réglage (380) de telle sorte que ladite position dudit faisceau de détection mobile est maintenue égale à la hauteur de lame.

7. Outil électrique selon la revendication 1, dans lequel ledit capteur mobile (110) est mobile en réponse au mouvement du mécanisme de réglage (380) de telle sorte que ladite position dudit faisceau de détection mobile est maintenue égale à un pourcentage prédéterminé de la hauteur de lame.

8. Outil électrique selon la revendication 1, ledit dispositif de commande (116) étant en outre configuré pour déterminer une vitesse de pièce à travailler (W) en réponse à la détection par ledit capteur mobile (110) du bord supérieur et du bord inférieur de la pièce à travailler (W) lorsqu'elle se déplace vers la lame de scie (108).
